(19) **Europäisches Patentamt / European Patent Office / Office européen des brevets**

(11) **EP 4 738 831 A1**

(12) **EUROPEAN PATENT APPLICATION**
published in accordance with Art. 153(4) EPC

(43) Date of publication:
06.05.2026 Bulletin 2026/19

(21) Application number: 24832459.2

(22) Date of filing: 27.06.2024

(51) International Patent Classification (IPC):
*H04N 19/85* (2014.01)  *H04N 19/117* (2014.01)
*H04N 19/70* (2014.01)  *H04N 19/172* (2014.01)
*G06N 3/02* (2006.01)

(52) Cooperative Patent Classification (CPC):
G06N 3/02; H04N 19/117; H04N 19/172;
H04N 19/70; H04N 19/85

(86) International application number:
PCT/KR2024/008958

(87) International publication number:
WO 2025/005681 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023  US 202363523373 P

(71) Applicant: **LG Electronics Inc.**
**Yeongdeungpo-gu**
**Seoul 07336 (KR)**

(72) Inventor: **TAN, Hendry**
**Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD, METHOD FOR TRANSMITTING BITSTREAM, AND RECORDING MEDIUM HAVING STORED BITSTREAM THEREIN**

(57)  Provided are an image encoding/decoding method, a bitstream transmission method, and a computer-readable recording medium storing a bitstream. The image decoding method according to the present disclosure comprises the steps of: acquiring post-filter-based output picture information for an input picture from a neural-network post-filter (NNPF)-related supplemental enhancement information (SEI) message; and on the basis of the output picture information, acquiring an output picture for the input picture, wherein the output picture information may include output picture output information which is information indicating whether or not the output picture for the input picture is output.

FIG. 5

## Description

### Technical Field

The present disclosure relates to an image encoding/decoding method, a method of transmitting a bitstream and a recording medium storing a bitstream, and more specifically, to an image encoding/decoding method related to a neural-network post-processing filter, a method of transmitting a bitstream and a recording medium storing a bitstream.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

Also, an object of the present disclosure is to provide a method of processing NNPF related SEI messages (NNPFC SEI and NNPFA SEI).

Also, an object of the present disclosure is to more clearly specify an output picture of NNPF by the NNPF related SEI message.

Also, an object of the present disclosure is to provide clarify the meaning of information related to the output picture of NNPF.

Also, an object of the present disclosure is to reduce the error of a decoder by clarifying the meaning of information related to the output picture of NNPF.

Also, an object of the present disclosure is to improve coding quality and efficiency by clarifying the meaning of information related to the output picture of NNPF.

Also, an object of the present disclosure is to improve coding efficiency by determining whether to output an output picture when an input picture is not present.

Also, an object of the present disclosure is to provide a non-transitory computer-readable recording medium storing a bitstream generated by an image encoding method according to the present disclosure.

Also, an object of the present disclosure is to provide a non-transitory computer-readable recording medium storing a bitstream received, decoded and used to reconstruct an image by an image decoding apparatus according to the present disclosure.

Also, an object of the present disclosure is to provide a method of transmitting a bitstream generated by an image encoding method according to the present disclosure.

The technical problems solved by the present disclosure are not limited to the above technical problems and other technical problems which are not described herein will become apparent to those skilled in the art from the following description.

### Technical Solution

An image decoding method performed by an image decoding apparatus according to an embodiment of the present disclosure may comprise obtaining post-filter-based output picture information for an input picture from a neural-network post-filter (NNPF) related supplemental enhancement information (SEI) message and obtaining an output picture for the input picture based on the output picture information. The output picture information may include output picture output information, which is information specifying whether the output picture for the input picture is output.

Meanwhile, as an embodiment, a value of the output picture output information may be determined based on whether the input picture is present.

Meanwhile, as an embodiment, a value of the output picture output information may be further determined based on output picture presence information, which is information specifying whether the output picture for the input picture is present.

Meanwhile, as an embodiment, based on the input picture being not present and the output picture presence information specifying that the output picture is present, the output picture output information may specify that the output picture is not output.

Meanwhile, as an embodiment, the number of output picture output information may be determined to be a value within a specific range.

Meanwhile, as an embodiment, the specific range may be determined based on an index value of a specific input picture.

Meanwhile, as an embodiment, the number of output picture output information may be always determined to be a value greater than a specific value.

Meanwhile, as an embodiment, output of the output picture for the input picture which is not present may be excluded in a filtering process based on the NNPF.

Meanwhile, as an embodiment, the output picture presence information may be obtained from an NNPFC SEI message.

Meanwhile, as an embodiment, the output picture output information may be obtained from an NNPFA SEI message.

An image encoding method performed by an image encoding apparatus according to an embodiment of the present disclosure may comprise determining post-filter-based output picture information for an input picture and signaling the output picture information as a neural-network post-filter (NNPF) related supplemental enhancement information (SEI) message. The output picture information may include output picture output information, which is information specifying whether the output picture for the input picture is output.

Also, according to the present disclosure, it is possible to provide a non-transitory computer-readable recording medium storing a bitstream generated by an image encoding method according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

Also, according to the present disclosure, the semantics of information in an NNPF-related SEI message can be modified to enable more clear meaning transmission.

Also, according to the present disclosure, error of a decoder can be reduced by modifying the semantics of information in the NNPF-related SEI message.

Also, according to the present disclosure, efficiency can be improved by clarifying output of an output picture with the NNPF-related SEI message.

Also, according to the present disclosure, efficiency can be improved by more clearly specifying information about an output picture of NNPF by the NNPF-related SEI message.

Also, according to the present disclosure, coding quality and efficiency can be improved by clarifying the meaning of information related to an output picture of NNPF.

Also, according to the present disclosure, it is possible to provide a non-transitory computer-readable recording medium storing a bitstream generated by an image encoding method according to the present disclosure.

Also, according to the present disclosure, it is possible to provide a non-transitory computer-readable recording medium for storing a bitstream received, decoded and used to reconstruct an image by an image decoding apparatus according to the present disclosure.

Also, according to the present disclosure, it is possible to provide a method of transmitting a bitstream generated by an image encoding method.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

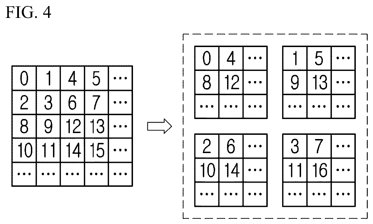

FIG. 4 is a diagram for explaining an interleaved method for deriving a luma channel.

FIG. 5 is a flowchart for explaining an image decoding method to which an embodiment according to the present disclosure is applicable.

FIG. 6 is a flowchart for explaining an image encoding method to which an embodiment according to the present disclosure is applicable.

FIG. 7 is a view showing a content streaming system to which an embodiment of the present disclosure is applicable.

## Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an $M \times N$ block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

Overview of video **coding** system

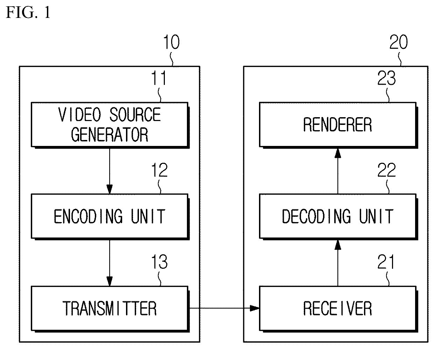

FIG. 1 is a view showing an example of a video coding system to which an embodiment of the present disclosure is applicable.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit (otherwise referred to as an encoder) 12 and a transmitter 13. The decoding apparatus 20 according to an embodiment may include a receiver 21, a decoding unit (otherwise referred to as a decoder) 22 and a renderer 23. The encoding unit 12 may be called a video/image encoding apparatus, and the decoding unit 22 may be called a video/image decoding apparatus. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing, or generating the video/image. The video source generator 11 may include a video/image capture device and/or a video/-image generating device. The video/image capture device may include, for example, one or more cameras, video/image archives including previously captured video/images, and the like. The video/image generating device may include, for example, computers, tablets and smartphones, and may electronically generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may obtain the encoded video/image information or data output in the form of a bitstream and forward it to the receiver 21 of the decoding apparatus 20 or another external object through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The transmitter 13 may be provided as a transmission device separate from the encoding apparatus 12, and in this case, the transmission device may include at least one processor that acquires encoded video/image information or data output in the form of a bitstream and a transmission unit for transmitting it in the form of a file or streaming. The receiver 21 may extract/receive the bitstream from the storage medium or network and transmit the bitstream to the decoding unit 22.

The decoding unit 22 may decode a video/image by performing a series of procedures such as dequantization, inverse transform, prediction, etc. corresponding to the operation of the encoding unit 12.

The renderer 23 may render the decoded video/image. The rendered video/image may be displayed through the display.

Overview of image encoding apparatus

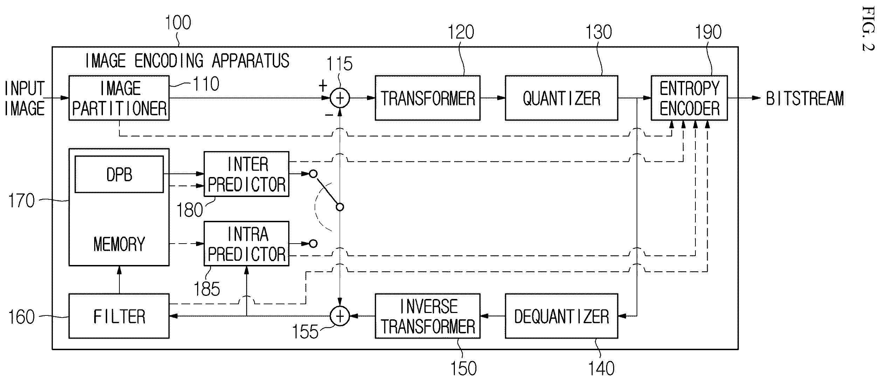

FIG. 2 is a view schematically showing an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first, and the binary tree structure and/or ternary structure may be applied later. The coding procedure according to embodiments of the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit (intra predictor) 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit (inter predictor) 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may construct a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loeve transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

Overview **of image decoding apparatus**

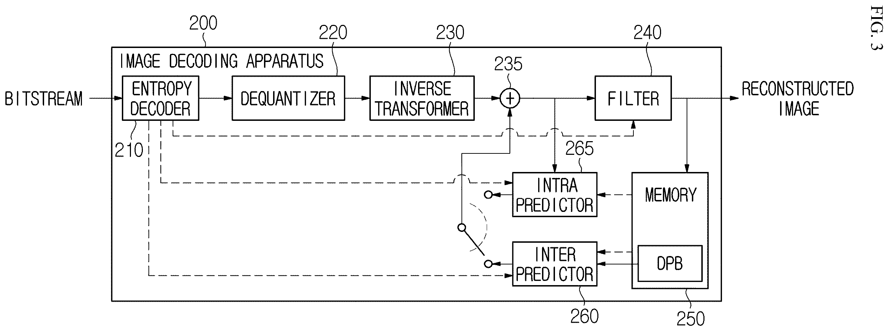

FIG. 3 is a view schematically showing an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter predictor (inter prediction unit) 260 and the intra predictor(intra prediction unit) 265 may be collectively referred to as a "prediction unit(predictor)". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 170 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter predictor 260, and the intra predictor 265 of the image decoding apparatus 200.

### Neural-network post-filter characteristics (NNPFC)

A combinations of Tables 1 to 3 represent an example of NNPFC syntax structure.

[Table 1]

| nn_post_filter_characteristics( payloadSize ) { | Descriptor |
|---|---|
| **nnpfc_purpose** | u(16) |
| **nnpfc_id** | ue(v) |
| **nnpfc_base_flag** | u(1) |
| **nnpfe_mode_idc** | ue(v) |
| if( nnpfc_mode_idc = = 1 ) { | |
| while( !byte_aligned( ) ) | |
| **nnpfc_reserved_zero_bit_a** | u(1) |
| **nnpfc_tag_uri** | st(v) |
| **nnpfc_uri** | st(v) |
| } | |
| **nnpfc_property_present_flag** | u(1) |
| if( nnpfc_property_present_flag ) { | |
| /* input and output formatting */ | |
| **unpfc_num_input_pics_minus1** | ue(v) |
| if( nnpfc_num_input_pics_minus1 > 0 ) { | |
| for( i = 0; i <= nnpfc_num_input_pics_minus1; i++ ) | |
| **nnpfc_input_pic_output_flag[** i ] | u(1) |
| **nnpfc_absent_input_pic_zero_flag** | u(1) |
| } | |
| if( chromaUpsamplingFlag ) | |
| **nnpfc_out_sub_c_flag** | u(1) |
| if( colourizationFlag ) | |
| **nnpfc_out_colour_format_idc** | u(2) |
| if( resolutionResamplingFlag ) { | |
| **nnpfc_pic_width_num_minus1** | ue(v) |
| **nnpfc_pic_width_denom_minus1** | ue(v) |
| **nnpfc_pic_height_num_minus1** | ue(v) |
| **nnpfc_pic_height_denom_minus1** | ue(v) |
| } | |
| if( pictureRateUpsamplingFlag ) | |
| for( i = 0; i < nnpfc_num_input_pics_minus1; i++ ) | |
| n**npfc_interpolated_pics[** i ] | ue(v) |
| **nnpfc_component_last_flag** | u(1) |
| **nnpfc_inp_format_idc** | ue(v) |
| **nnpfc_auxiliary_inp_idc** | ue(v) |

[Table 2]

| **nnpfc_inp_order_idc** | ue(v) |
|---|---|
| if( nnpfc_inp_format_idc == 1 ) { | |

(continued)

| | |
|---|---|
| if( nnpfc_inp_order_idc != 1 ) | |
| **nnpfc_inp_tensor_luma_bitdepth_minus8** | ue(v) |
| if( nnpfc_inp_order_idc != 0 ) | |
| **nnpfc_inp_tensor_chroma_bitdepth_minus8** | ue(v) |
| } | |
| **nnpfc_out_format_idc** | ue(v) |
| **nnpfc_out_order_idc** | ue(v) |
| if( nnpfc_out_format_idc == 1 ) { | |
| if( nnpfc_out_order_idc != 1 ) | |
| **nnpfc_out_tensor_luma_bitdepth_minus8** | ue(v) |
| if( nnpfc_out_order_idc != 0 ) | |
| **nnpfc_out_tensor_chroma_bitdepth_minus8** | ue(v) |
| } | |
| **nnpfc_separate_colour_description_present_flag** | u(1) |
| if( nnpfc_separate_colour_description_present_flag ) { | |
| **nnpfc_colour_primaries** | u(8) |
| **nnpfc _transfer_characteristics** | u(8) |
| if( nnpfc_out_format_idc == 1 ) { | |
| **nnpfc_matrix_coeffs** | u(8) |
| **nnpfc_full_range_flag** | u(1) |
| } | |
| } | |
| **nnpfc_chroma_loc_info_present_flag** | u(1) |
| if( nnpfc_chroma_loc_info_present_flag ) | |
| **nnpfc_chroma_sample_loc_type_frame** | ue(v) |
| **nnpfc_overlap** | ue(v) |
| **nnpfc_constant_patch_size_flag** | u(1) |
| if( nnpfc_constant_patch_size_flag ) { | |
| **nnpfc_patch_width_minus1** | ue(v) |
| **nnpfc_patch_height_minus1** | ue(v) |
| } else { | |
| **nnpfc_extended_patch_width_cd_delta_minus1** | ue(v) |
| **nnpfc_extended_patch_height_cd_delta_minus1** | ue(v) |
| } | |

[Table 3]

| | |
|---|---|
| **nnpfc_padding_type** | ue(v) |
| if( nnpfc_padding_type == 4 ) { | |
| if( nnpfc_inp_order_idc != 1 ) | |
| **nnpfc_luma_padding_val** | ue(v) |

(continued)

| | |
|---|---|
| if( nnpfc_inp_order_idc != 0 ) { | |
| **nnpfc_cb_padding_val** | ue(v) |
| **nnpfc_cr_padding_val** | ue(v) |
| } | |
| } | |
| **nnpfc_complexity_info_present_flag** | u(1) |
| if( nnpfc_complexity_info_present_flag ) { | |
| **nnpfc_parameter_type_ide** | u(2) |
| if( nnpfc_parameter_type_idc != 2 ) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| **nnpfc_metadata_extension_num_bits** | ue(v) |
| if( impfc_metadata_extension_num_bits > 0 ) | |
| **nnpfc_reserved_metadata_extension** | u(v) |
| } | |
| /* ISO/IEC 15938-17 bitstream */ | |
| if( nnpfc_mode_idc = = 0 ) { | |
| while( !byte_aligned( ) ) | |
| **nnpfc_reserved_zero_bit_b** | u(1) |
| for( i = 0; more_data_in_payload( ); i++ ) | |
| **nnpfc_payload_byte**[ i ] | b(8) |
| } | |
| } | |

The NNPFC syntax structures of Tables 1 to 3 may be signaled in the form of a supplemental enhancement information (SEI) message. An SEI message signaling the NNPFC syntax structures of Tables 1 to 3 may be referred to as an NNPFC SEI message.

The NNPFC SEI message may specify a neural network that may be used as a post-processing filter. The use of specified neural-network post-processing filters (NNPFs) for specific pictures may be indicated with neural-network post-filter activation (NNPFA) SEI messages. Here, "post-processing filter" and "post filter" may have the same meaning.

Use of this SEI message requires the definition of the following variables:

- Input picture width and height may be cropped in units of luma samples, denoted herein by CroppedWidth and CroppedHeight, respectively.
- Luma sample array CroppedYPic[idx] and chroma sample arrays CroppedCbPic[idx] and CroppedCrPic[idx], when present, of the input pictures with index idx in the range of 0 to numInputPics-1, inclusive, that are used as input for the NNPF.
- $BitDepth_Y$ may represent a bit depth for the luma sample array of the input pictures.
- BitDepthc may represent a bit depth for the chroma sample arrays, if any, of the input pictures.
- ChromaFormatIdc may represent a chroma format identifier.
- When nnpfc_auxiliary_inp_idc is equal to 1, a filtering strength control value array StrengthControlVal[idx] of input pictures shall include a real number in the range of 0 to 1, inclusive, an index idx may have a range of 0 to numInputPics-1.

Input picture with index 0 may correspond to the picture for which the NNPF defined by this NNPFC SEI message is activated by an NNPFA SEI message. Input picture with index i in the range of 1 to numInputPics - 1, inclusive, may precede the input picture with index i-1 in output order.

nnpfc_purpose indicates the purpose of the NNPF as specified in Table 4. In Table 4, a non-zero ( nnpfc_purpose & bitMask ) may specify that the NNPF in Table 4 has a purpose associated with the bitMask value. If nnpfc_purpose is greater than 0 and ( nnpfc_purpose & bitMask ) is equal to 0, the purpose associated with the bitMask value may not be applicable to the NNPF. If nnpfc_purpose is equal to 0, the NNPF may be used at the determination of the application. The value of nnpfc_purpose shall be in the range of 0 to 63, inclusive, in bitstreams. Values of 64 to 65 535, inclusive, for nnpfc_purpose may be reserved for future use. Decoders shall ignore NNPFC SEI messages with nnpfc_purpose in the range of 64 to 65 535, inclusive.

[Table 4]

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |

The variable chromaUpsamplingFlag indicating whether the purpose of the NNPF indicated by nnpfc_purpose is chroma upsampling, the variable resolutionResamplingFlag specifying whether the purpose of the NNPF indicated by nnpfc_purpose is resolution resampling, the variable pictureRateUpsamplingFlag specifying whether the purpose of the NNPF indicated by nnpfc_purpose is picture rate upsampling, the variable bitDepthUpsamplingFlag specifying whether the purpose of the NNPF indicated by nnpfc_purpose is bit depth upsampling, and the variable colourizationFlag specifying whether the purpose of the NNPF indicated by nnpfc_purpose is colourization may be derived as shown in Table 5 below.

[Table 5]

chromaUpsamplingFlag = ( ( nnpfc_purpose & 0x02 ) > 0 ) ? 1 : 0
resolutionResamplingFlag = ( ( nnpfc_purpose & 0x04 ) > 0 ) ? 1 : 0
pictureRateUpsamplingFlag = ( ( nnpfc purpose & 0x08 ) > 0 ) ? 1 : 0
bitDepthUpsamplingFlag = ( ( nnpfc_purpose & 0x10 ) > 0 ) ? 1 : 0
colourizationFlag = ( ( nnpfc_purpose & 0x20 ) > 0 ) ? 1 : 0

When ChromaFormatIdc is equal to 3, chromaUpsamplingFlag may be restricted to be equal to 0. When ChromaFormatIde or chromaUpsamplingFlag is not equal to 0, colourizationFlag may be restricted to be equal to 0. When pictureRateUpsamplingFlag is equal to 1 and the input picture with index 0 is associated with a frame packing arrangement SEI message with fp_arrangement_type equal to 5, all input pictures may be associated with frame packing arrangement SEI messages with fp_arrangement_type equal to 5 and fp_current_frame_is_frame0_flag being equal.

nnpfc_id may contain an identifying number that may be used to identify an NNPF. The value of nnpfc_id shall be in the range of 0 to $2^{32}$-2, inclusive. Values of nnpfc_id from 256 to 511, inclusive, and from $2^{31}$ to $2^{32}$-2, inclusive, may be reserved for future use. Decoders shall ignore an NNPFC SEI message with nnpfc_id in the range of 256 to 511, inclusive, or in the range of $2^{31}$ to $2^{32}$-2, inclusive.

When an NNPFC SEI message is the first NNPFC SEI message, in decoding order, that has a specific nnpfc_id value within the current CLVS, the following applies:

- This SEI message specifies a base NNPF.
- This SEI message pertains to the current decoded picture and all subsequent decoded pictures of the current layer, in output order, until the end of the current CLVS.

The NNPFC SEI message may be a repetition of a previous NNPFC SEI message within the current CLVS in decoding order, and subsequent semantics may apply as if this SEI message were the only NNPFC SEI message with identical content within the current CLVS.

nnpfc_mode_idc equal to 0 may indicate that the SEI message may contain a bitstream representing the base NNPF, or may represent an update relative to the base NNPF with the same nnpfc_id value.

When the NNPFC SEI message is the first NNPFC SEI message, in decoding order, that has a specific nnpfc_id value within the current CLVS, nnpfc_mode_idc equal to 1 may specify that the base NNPF associated with the nnpfc_id value is a neural network, and the neural network may be a neural network identified by a URI denoted by nnpfc_uri using a format identified by a tag URI nnpfc_tag_uri.

If the NNPFC SEI message is neither the first NNPFC SEI message, in decoding order, that has a specific nnpfc_id value within the current CLVS nor a repetition of the first NNPFC SEI message, nnpfc_mode_idc equal to 1 may specify that an update relative to the base NNPF with the same nnpfc_id value are defined by a URI denoted by nnpfc_uri using a format identified by a tag URI nnpfc_tag_uri.

nnpfc_base_flag equal to 1 may specify that the SEI message represents a base NNPF. nnpfc_base_flag equal to 0 may specify that the SEI message represents an update related to the base NNPF.

The following constraints apply to the value of nnpfc_base_flag:

- When an NNPFC SEI message is the first NNPFC SEI message, in decoding order, that has a specific nnpfc_id value within the current CLVS, the value of nnpfc _base_flag shall be equal to 1.

When an NNPFC SEI message nnpfcB is not the first NNPFC SEI message, in decoding order, that has a specific nnpfc_id value within the current CLVS and the value of nnpfc_base_flag is equal to 1, the NNPFC SEI message shall be a repetition of the first NNPFC SEI message nnpfcA with the same nnpfc_id value, in decoding order, i.e., the payload content of nnpfcB shall be the same as that of nnpfcA.

If the value of nnpfc _base_flag is 0, the following restrictions may apply:

- This SEI message may define updates relative to a base NNPF preceding it in decoding order using the same nnpfc_id value. The updates are not cumulative, but each update may be applied to the base NNPF, which is the NNPF specified in the first NNPFC SEI message in decoding order with a specific nnpfc_id value within the current CLVS. The NNPF defined by this SEI message may be obtained by applying updates defined by SEI message relative to the base NNPF with the same nnpfc_id value.
- This SEI message may be associated with the current decoded picture and all subsequent decoded pictures up to the end of the current CLVS in output order of the current layer. Here, decoded pictures that follow the current decoded picture in output order within the current CLVS may be excluded. This SEI message may be associated with a subsequent NNPFC SEI message in decoding order that has nnpfc _base__flag equal to 0 and an earlier value of specific nnpfc_id values within the current CLVS.

nnpfc_mode_idc equal to 0 may indicate that the SEI message contains a bitstream representing a base NNPF (if the value of nnpfc _base__flag is 1) or is an update to a base NNPF with the same nnpfc_id value (if the value of nnpfc _base_flag is 0). If the value of nnpfc _base_flag is 1, nnpfc_mode_ide equal to 1 may specify that the base NNPF associated with the value of nnpfc_id is associated with a neural network identified by a URI, where the URI may be indicated by nnpfc_uri in a format indicated by a tag URI nnpfc_tag_uri. When the value of nnpfc _base__flag is 0, nnpfc_mode_idc equal to 1 may specify that the update associated with the base NNPF of the same nnpfc_id value is defined by a URI, where the URI may be indicated by nnpfc_uri in the format indicated by the tag URI nnpfc_tag_uri.

The value of nnpfc_mode_idc may be restricted to have the range of 0 to 1 in the bitstream. Values for nnpfc_mode_idc in the range of 2 to 255 may be reserved for future use and may not be present in the bitstream. Decoders shall ignore NNPFC SEI messages with nnpfc_mode_idc in the range of 2 to 255. Values of nnpfc_mode_idc greater than 255 are not present in the bitstream and may not be reserved for future use.

nnpfc_reserved_zero_bit_a may be restricted to have a value equal to 0 due to bitstream constraints. Decoders may be restricted to ignore NNPFC SEI messages with a non-zero value of nnpfc_reserved_zero_bit_a.

The nnpfc_tag_uri may contain a tag URI with syntax and semantics specified in IETF RFC 4151 that identifies a neural network used as the base NNPF, or an update to the base NNPF using the nnpfc_id value specified by the nnpfc_uri. When nnpfc_tag_uri is used, the format of the neural network data specified by the nnrpf uri without the need for a central registry authority may be uniquely identified. An nnpfc_tag_uri equal to "tag:iso.org,2023:15938-17" may specify that the neural network data identified by the nnpfc_uri complies with ISO/IEC 15938-17.

nnpfc_uri may contain a URI with syntax and semantics specified in IETF Internet Standard 66 that identifies a neural network used as the base NNPF, or an update related to the base NNPF that uses the same nnpfc_id value.

nnpfc_property_present _flag equal to 1 may specify the presence of syntax elements related to filter purpose, input formatting, output formatting and complexity. nnpfc_property_present _flag equal to 0 may indicate the absence of syntax elements related to filter purpose, input formatting, output formatting and complexity. If the value of nnpfc _base__flag is 1, nnpfc_property_present _flag may be restricted to have a value of 1. If the value of nnpfc_property_present _flag is 0, the values of all syntax elements that may be present only when the value of nnpfc_property_present_flag is 1 may be inferred to be equal to the values of their corresponding syntax elements in the NNPFC SEI message that contains the base NNPF to which the SEI message provides an update.

When an NNPFC SEI message is not the first NNPFC SEI message, in decoding order, that has a specific nnpfc_id value within the current CLVS, is not a repetition of the first NNPFC SEI message with the specific nnpfc_id (i.e., the value of nnpfc _base_flag is equal to 0), and the value of nnpfc_property_present _flag is equal to 1, the following constraints apply:

- The value of nnpfc_purpose in the NNPFC SEI message shall be the same as the value of nnpfc_purpose in the first NNPFC SEI message, in decoding order, that has the specific nnpfc_id value within the current CLVS.
- The values of the syntax elements nnpfc _base_flag and preceding nnpfc_complexity_info_present flag in the NNPFC SEI message shall be identical to the values of the corresponding syntax elements in the first NNPFC SEI message with a specific nnpfc_id value within the current CLVS in decoding order.
- Either nnpfc_complexity_info_present_flag shall be equal to 0 or both nnpfc_complexity_info_present_flag shall be equal to 1 in the first NNPFC SEI message, in decoding order, that has the specific nnpfc_id value within the current CLVS and all the following apply:

> (1) nnpfc_parameter_type_idc in nnpfcCurr shall be equal to nnpfc_parameter_type_idc in nnpfcBase.
> (2) nnpfc_log2_parameter_bit_length_minus3 in nnpfcCurr, when present, shall be less than or equal to nnpfc_log2_parameter_bit_length_minus3 in nnpfcBase.
> (3) If nnpfc_num_parameters_idc in nnpfcBase is equal to 0, nnpfc_num_parameters_idc in nnpfcCurr shall be equal to 0.
> (4) Otherwise (nnpfc _num_parameters_idc in nnpfcBase is greater than 0), nnpfc _num_parameters_ide in nnpfcCurr shall be greater than 0 and less than or equal to nnpfc _num_parameters_idc in nnpfcBase.
> (5) If nnpfc_num_kmac_operations_idc in nnpfcBase is equal to 0, nnpfc_num_kmac_operations_idc in nnpfcCurr shall be equal to 0.
> (6) Otherwise (nnpfc_num_kmac_operations_idc in nnpfcBase is greater than 0), nnpfc_num_kmac_operations_idc in nnpfcCurr shall be greater than 0 and less than or equal to nnpfc_num_kmac_operations_idc in nnpfcBase.
> (7) If nnpfc_total_kilobyte_size in nnpfcBase is equal to 0, nnpfc_total_kilobyte_size in nnpfcCurr shall be equal to 0.
> (8) Otherwise (nnpfc_total_kilobyte_size in nnpfcBase is greater than 0), nnpfc_total_kilobyte_size in nnpfcCurr shall be greater than 0 and less than or equal to nnpfc_total_kilobyte_size in nnpfcBase.

nnpfc_num_input_pics_minus1 + 1 may specify the number of decoded output pictures used as input to NNPF. The value of nnpfc_num_input_pics_minus1 shall be present in the range of 0 to 63. If the value of pictureRateUpsamplingFlag is 1, the value of nnpfc_num_input_pics_minus1 may be restricted to be greater than 0.

The variable numInputPics, which represents the number of pictures used as input to NNPF, may be derived as in Equation 1.

[Equation 1]

$$numInputPics = nnpfc\_num\_input\_pics\_minus1 + 1$$

nnpfc_input_pic_output_flag[ i ] equal to 1 may specify that NNPF generates a corresponding output picture for the i-th input picture. nnpfc _input_pic_output_flag[ i ] equal to 0 may specify that NNPF does not generate a corresponding output picture for the i-th input picture. If the value of nnpfc_num_input_pics_minus1 is 0, the value of nnpfc _input_pic_output_flag[ 0 ] may be inferred to be 1. If the value of pictureRateUpsamplingFlag is equal to 0 and the value of nnpfc_num_input_pics_minus1 is greater than 0, nnpfc_input_pic_output_flag[ i ] may be restricted to be equal to 1 for at least one value of i in the range from 0 to nnpfc_num_input_pics_minus1.

nnpfc_absent_input_pic_zero_flag equal to 1 may specify that NNPF expects that an input picture that is not present in the bitstream is represented by sample arrays having sample values of 0. nnpfc_absent_input_pic_zero_flag equal to 0 may specify that NNPF expects that an input picture that is not present in the bitstream is represented by the input picture that is closest in output order in the bitstream.

nnpfc_out_sub_c_flag may specify the values of the variables outSubWidthC and outSubHeightC when the value of chromaUpsamplingFlag is equal to 0. nnpfc_out_sub_c_flag equal to 1 may specify that outSubWidthC is equal to 1 and outSubHeightC is equal to 1. nnpfc_out_sub_c flag equal to 0 may specify that outSubWidthC is equal to 2 and outSubHeightC is equal to 1. If ChromaFormatIdc is equal to 2 and nnpfc_out_sub_c_flag is present, the value of nnpfc_out_sub_c_flag shall be equal to 1.

nnpfc_out_colour_format_idc may specify the color format of the NNPFC output and the values of the variables outSubWidthC and outSubHeightC accordingly, when colourizationFlag is equal to 1. nnpfc_out_colour_format_idc equal to 1 may specify that the color format of the NNPF output is a 4:2:0 format, and outSubWidthC and outSubHeightC are both equal to 2. nnpfc_out_colour_format_idc equal to 2 may specify that the color format of the NNPF output is a 4:2:2 format, outSubWidthC is 2, and outSubHeightC is 1. nnpfc_out_colour_format_idc equal to 3 may specify that the color format of the NNPF output is a 4:4:4 format, and outSubWidthC and outSubHeightC are both equal to 1. The value of nnpfc_out_colour_format_idc may be restricted not to be equal to 0. If both chromaUpsamplingFlag and colourizationFlag are equal to 0, then outSubWidthC and outSubHeightC may be inferred to be equal to SubWidthC and SubHeightC, respectively.

nnpfc_pic_width_num_minus1+1 and nnpfc_pic_width_denom_minus1+1 may represent the numerator and denominator for the resampling ratio of the NNPF output picture width to CroppedWidth, respectively. The value obtained by dividing ( nnpfc_pic_width_num_minus1 + 1 ) by ( nnpfc_pic_width_denom_minus1 + 1 ) shall be in the range of 1/16 to 16, inclusive. If nnpfc_pic_width_num_minus1 and nnpfc_pic_width_denom _minus1 are not present, both nnpfc_pic_width_num_minus1 and nnpfc_pic_width_denom_minus1 may be inferred to be 0.

The variable nnpfcOutputPicWidth represents the width of the luma sample arrays of the picture(s) corresponding to the result of applying the NNPF identified by nnpfc_id to the input picture(s), and may be derived as in Equation 2.

[Equation 2]

$$nnpfcOutputPicWidth = Ceil(\ CroppedWidth *$$
$$(\ nnpfc\_pic\_width\_num\_minus1 + 1\ ) \div (\ nnpfc\_pic\_width\_denom\_minus1 + 1\ ))$$

The remainder obtained by dividing nnpfcOutputPicWidth by outSubWidthC shall be 0.

nnpfc_pic_height_num_minus1+1 and nnpfc_pic_height_denom_minus1+1 may specify the numerator and denominator of the resampling ratio of the NNPF output picture height to CroppedHeight, respectively. The value obtained by dividing ( nnpfc_pic_height_num_minus1 + 1 ) by ( nnpfc_pic_height_denom _minus1 + 1 ) shall be in the range of 1/16 to 16. If nnpfc_pic_height_num_minus1 and nnpfc_pic_height_denom_minus1 are not present, both nnpfc_pic_height_num_minus1 and nnpfc_pic_height_denom_minus1 may be inferred to be 0.

The variable nnpfcOutputPicHeight specifies the height of the luma sample arrays of the picture(s) corresponding to the result of applying the NNPF identified by nnpfc_id to the input picture(s), and may be derived as in Equation 3.

[Equation 3]

$$nnpfcOutputPicHeight = Ceil(\ CroppedHeight *$$
$$(\ nnpfc\_pic\_height\_num\_minus1 + 1\ ) \div (\ nnpfc\_pic\_height\_denom\_minus1 + 1\ ))$$

The remainder obtained by dividing nnpfcOutputPicHeight by outSubHeightC shall be 0.

If nnpfc_pic_width_num_minus1, nnpfc_pic_width_denomminus1, nnpfc_pic_height_num_minus1, and nnpfc_pic_height_denom_minus1 are present, at least one of the following constraints shall be true:

- The value of nnpfcOutputPicWidth is not equal to CroppedWidth
- The value of nnpfcOutputPicHeight is not equal to CroppedHeight

nnpfc_interpolated_pics[ i ] may specify the number of interpolated pictures generated by NNPF between the i-th picture and the (i + 1)-th picture used as input of the NNPF. The value of nnpfc_interpolated_pics[ i ] shall be in the range of 0 to 63, inclusive. The value of nnpfc_interpolated_pics[ i ] shall be greater than 0 for at least one i in the range of 0 to nnpfc _num_input_pics_minus1 - 1, inclusive.

A variable NumInpPicsInOutputTensor specifying the number of pictures that have corresponding input pictures and are present in the output tensor of NNPF, a variable InpIdx[ idx ] specifying the input picture index of the idx-th picture that has corresponding input pictures and are present in the output tensor of NNPF, and a variable numOutputPics specifying the total number of pictures that are present in the output tensor of NNPF may be derived as shown in Table 6.

[Table 6]

```
for( i = 0, numOutputPics = 0; i < numInputPics; i++ )
    if( nnpfc_input_pic_output_flag[ i ] ) {
        InpIdx[ numOutputPics ] = i
        numOutputPics++
    }
NumInpPicsInOutputTensor = numOutputPics
if( pictureRateUpsamplingFlag )
    for( i = 0; i <= numInputPics − 2; i++ )
        numOutputPics += nnpfc_interpolated_pics[ i ]
```

nnpfc_component_last_flag equal to 1 may specify that the last dimension in the input tensor inputTensor for the NNPF and the output tensor outputTensor resulting from the NNPF are used for a current channel. nnpfc_component_last_flag equal to 0 may specify that the third dimension in the input tensor inputTensor for the NNPF and the output tensor outputTensor resulting from the NNPF are used for a current channel. The first dimension in the input and output tensors may be used as the batch index, which is a practice in some neural network frameworks. While formulae in the semantics of this SEI message use the batch size corresponding to the batch index equal to 0, it is up to the post-processing implementation to determine the batch size used as input to the neural network inference. For example, when nnpfc_inp_order_idc is equal to 3 and nnpfc_auxiliary_inp_ide is equal to 1, there are 7 channels in the input tensor, including four luma matrices, two chroma matrices, and one auxiliary input matrix. In this case, the process DeriveInputTensors() would derive each of these 7 channels of the input tensor one by one, and when a specific channel of these channels is processed, that channel may be referred to as the current channel during the process.

nnpfc_inp_format_idc may specify the method of converting a sample value of an input picture into an input value to the NNPF. When the value of nnpfc_inp_format_idc is equal to 1, the input values to the NNPF are real numbers and the functions InpY() and InpC() may be specified as shown in Equation 4.

[Equation 4]

$$InpY( x ) = x \div ( ( 1 << BitDepth_Y ) − 1 )$$

$$InpC( x ) = x \div ( ( 1 << BitDepth_C ) − 1 )$$

When nnpfc_inp_format_idc is equal to 1, the input values to the NNPF are unsigned integer numbers and the functions InpY() and InpC() are specified as shown in Table 7.

[Table 7]

$$shiftY = BitDepth_Y - inpTensorBitDepth_Y$$
$$if(\ inpTensorBitDepth_Y\ >=\ BitDepth_Y)$$
$$\quad InpY(\ x\ ) = x\ <<\ (\ inpTensorBitDepth_Y\ -\ BitDepth_Y\ )$$
$$else$$
$$\quad InpY(\ x\ ) = Clip3(0,\ (\ 1\ <<\ inpTensorBitDepth_Y\ ) - 1,\ (\ x + (\ 1\ <<\ (\ shiftY - 1\ )\ )\ )\ >>\ shiftY\ )$$

$$shiftC = BitDepth_C - inpTensorBitDepth_C$$
$$if(\ inpTensorBitDepth_C\ >=\ BitDepth_C\ )$$
$$\quad InpC(\ x\ ) = x\ <<\ (\ inpTensorBitDepth_C\ -\ BitDepth_C\ )$$
$$else$$
$$\quad InpC(\ x\ ) = Clip3(0,\ (\ 1\ <<\ inpTensorBitDepth_C\ ) - 1,\ (\ x + (\ 1\ <<\ (\ shiftC - 1\ )\ )\ )\ >>\ shiftC\ )$$

The variable $inpTensorBitDepth_Y$ may be derived from the syntax element nnpfc_inp_tensor_luma_bitdepth_minus8 as specified below. inpTensorBitDepthc may be derived from the syntax element nnpfc_inp_tensor_chroma_bitdepth_minus8 as specified below. Values of nnpfc_inp_format_idc greater than 1 may be reserved for future use and may not be present in the bitstream. Decoders shall ignore NNPFC SEI messages containing reserved values of nnpfc_inpformat_idc.

nnpfc auxiliary_inp_idc greater than 0 may specify the presence of auxiliary input data in the input tensor of NNPF. nnpfc_auxiliary_inp_idc equal to 0 may specify that the auxiliary input data is not present in the input tensor. nnpfc_auxiliary_inp_idc equal to 1 may specify that the auxiliary input data is derived by the methods shown in Tables 10 to 12. The value of nnpfc_auxiliary_inp_idc shall be in the range of 0 to 1 in the bitstream. The values of 2 to 255 for nnpfc_auxiliary_inp_idc may be reserved for future use and shall not be present in the bitstream. Decoders shall ignore NNPFC SEI messages with nnpfc_auxiliary_inp_idc in the range of 2 to 255. Values of nnpfc_auxiliary_inp_idc greater than 255 are not present in the bitstream and are reserved for future use.

nnpfc_inp_order_idc may specify a method of ordering the sample arrays of an input picture to form an input tensor for NNPF. The value of nnpfc_inp_order_idc shall be in the range of 0 to 3 in the bitstream. The values of nnpfc_inp_order_idc in the range of 4 to 255 may be reserved for future use and may not be present in the bitstream. Decoders shall ignore NNPFC SEI messages with nnpfc_inp_order_idc in the range of 4 to 255. The values of nnpfc_inp_order_idc greater than 255 are not present in the bitstream and are not reserved for future use. The value of nnpfc_inp_idc shall not be 3 if the value of ChromaFormatIdc is not 1. If the value of ChromaFormatIdc is 0, the value of nnpfc_inp_order_idc shall be 3. If the value of chromaUpsamplingFlag is 1, the value of nnpfc _inp _order_idc shall not be 0.

Table 8 shows an informative description of nnpfc _inp_order_idc values.

[Table 8]

| nnpfx_inp_order_idc | Description |
|---|---|
| 0 | When nnpfc_auxiliary_inp_ide is equal to 0, one luma matrix may be present in the input tensor to each input picture and the number of channels may be 1. When nnpfc_auxiliary_inp_ide is equal to 1, one luma matrix and one auxiliary inputmatrix may be present and the number of channels may be 2. |
| 1 | When nnpfc_auxiliary_inp_idc is equal to 0, two chroma matrices may be present in the input tensor and the number of channels may be 2. When nnpfc_auxiliary_inp_idc is equal to 1, two chroma matrices and one auxiliary input matrix may be present and the number of channels may be 3. |
| 2 | When nnpfc_auxiliary_inp_idc is equal to 0, one luma matrix and two chroma matrices may be present in the input tensor and the number of channels may be 3. When nnpfc_auxiliary_inp_ide is equal to 1, one luma matrix, two chroma matrices and one auxiliary input matrix may be present and the number of channels may be 4. |
| 3 | When nnpfc_auxiliary_inp_idc is equal to 0, four luma matrices and two chroma matrices may be present in the input tensor and the number of channels may be 6. When nnpfc_auxiliary_inp_idc is equal to 1, four luma matrices, two chroma matrices and one auxiliary input matrix may be present and the number of channels may be 7. The luma channel may be derived using an interleaved method as shown in FIG. 4. nnpfc_inp_order_idc may be used only when an input chroma format is 4:2:0. |

(continued)

| nnpfx_inp_order_idc | Description |
|---|---|
| 4 ... 255 | reserved |

nnpfc_inp_tensor_luma bitdepth_minus8+8 may represent the bit depth of luma sample values in the input integer tensor. inpTensorBitDepthY may be derived as shown in Equation 5.

[Equation 5]

$$inpTensorBitDepth_Y = nnpfc\_inp\_tensor\_luma\_bitdepth\_minus8 + 8$$

The value of nnpfc_inp_tensor_luma_bitlength_minus8 may be restricted to be in the range of 0 to 24.
nnpfc_inp_tensor_chroma_bitdepth_minus8+8 may specify the bit depth of luma sample values in the input integer tensor. The value of inpTensorBitDepthC may be derived as shown in Equation 6.

[Equation 6]

$$inpTensorBitDepth_C = nnpfc\_inp\_tensor\_chroma\_bitdepth\_minus8 + 8$$

The value of nnpfc_inp_tensor_chroma_bitdepth minus8 may be restricted to be in the range of 0 to 24.
If the value of nnpfc_auxiliary_inp_idc is equal to 1, the variable strengthControlScaledVal may be derived as shown in Table 9.

[Table 9]

```
for( i = 0; i < numInputPics; i++ )
   if( nnpfc_inp_format_idc == 1 )
      if( nnpfc_inp_order_idc == 0 || nnpfc_inp_order_idc == 2 ||
          nnpfc_inp_order_idc == 3 )
         strengthControlScaledVal[ i ] =
            Floor ( StrengthControlVal[ i ] * ( ( 1  <<  inpTensorBitDepth_Y ) − 1 ) )
      else if( nnpfc_inp_order_idc == 1 )
         strengthControlScaledVal[ i ] =
            Floor ( StrengthControlVal[ i ] * ( ( 1  <<  inpTensorBitDepth_C ) − 1 ) )
   else
      strengthControlScaledVal[ i ] = StrengthControlVal[ i ]
```

A patch is a rectangular array of samples from a component (e.g., a luma or chroma component) of a picture.
The process DeriveInputTensors() for deriving an input tensor inputTensor for given vertical sample coordinates cTop and horizontal sample coordinates cLeft, which represent the top-left sample location of the sample patch contained in the input tensor, may be represented as a combination of Tables 10 to 12.

[Table 10]

```
for( i = 0; i < numInputPics; i++ ) {
  if( nnpfc_inp_order_idc = = 0 )
    for( yP = −nnpfc_overlap; yP < inpPatchHeight + nnpfc_overlap; yP++)
      for( xP = −nnpfc_overlap; xP < inpPatchWidth + nnpfc_overlap; xP++ ) {
        inpVal = InpY( InpSampleVal( cTop + yP, cLeft + xP, CroppedHeight,
            CroppedWidth, CroppedYPic[ i ], 0 ) )
        yPovlp = yP + nnpfc_overlap
        xPovlp = xP + nnpfc_overlap
        if( !nnpfc_component_last_flag )
          inputTensor[ 0 ][ i ][ 0 ][ yPovlp ][ xPovlp ] = inpVal
        else
          inputTensor[ 0 ][ i ][ yPovlp ][ xPovlp ][ 0 ] = inpVal
        if( nnpfc_auxiliary_inp_idc = = 1 )
          if( !nnpfc_component_last_flag )
            inputTensor[ 0 ][ i ][ 1 ][ yPovlp ][ xPovlp ] = strengthControlScaledVal[ i ]
          else
            inputTensor[ 0 ][ i ][ yPovlp ][ xPovlp ][ 1 ] = strengthControlScaledVal[ i ]
      }
  else if( nnpfc_inp_order_idc = = 1 )
    for( yP = −nnpfc_overlap; yP < inpPatchHeight + nnpfc_overlap; yP++)
      for( xP = −nnpfc_overlap; xP < inpPatchWidth + nnpfc_overlap; xP++ ) {
        inpCbVal = InpC( InpSampleVal( cTop + yP, cLeft + xP, CroppedHeight / SubHeightC,
            CroppedWidth / SubWidthC, CroppedCbPic[ i ], 1 ) )
        inpCrVal = InpC( InpSampleVal( cTop + yP, cLeft + xP, CroppedHeight / SubHeightC,
            CroppedWidth / SubWidthC, CroppedCrPic[ i ], 2 ) )
        yPovlp = yP + nnpfc_overlap
        xPovlp = xP + nnpfc_overlap
        if( !nnpfc_component_last_flag ) {
          inputTensor[ 0 ][ i ][ 0 ][ yPovlp ][ xPovlp ] = inpCbVal
          inputTensor[ 0 ][ i ][ 1 ][ yPovlp ][ xPovlp ] = inpCrVal
        } else {
          inputTensor[ 0 ][ i ][ yPovlp ][ xPovlp ][ 0 ] = inpCbVal
          inputTensor[ 0 ][ i ][ yPovlp ][ xPovlp ][ 1 ] = inpCrVal
        }
        if( nnpfc_auxiliary_inp_idc = = 1 )
          if( !nnpfc_component_last_flag )
            inputTensor[ 0 ][ i ][ 2 ][ yPovlp ][ xPovlp ] = strengthControlScaledVal[ i ]
          else
            inputTensor[ 0 ][ i ][ yPovlp ][ xPovlp ][ 2 ] = strengthControlScaledVal[ i ]
      }
```

[Table 11]

```
else if( nnpfc_inp_order_idc = = 2 )
    for( yP = -nnpfc_overlap; yP < inpPatchHeight + nnpfc_overlap; yP++)
        for( xP = -nnpfc_overlap; xP < inpPatchWidth + nnpfc_overlap; xP++ ) {
            yY = cTop + yP
            xY = cLeft + xP
            yC = yY / SubHeightC
            xC = xY / SubWidthC
            inpYVal = InpY( InpSampleVal( yY, xY, CroppedHeight,
                CroppedWidth, CroppedYPic[ i ], 0 ) )
            inpCbVal = InpC( InpSampleVal( yC, xC, CroppedHeight / SubHeightC,
                CroppedWidth / SubWidthC, CroppedCbPic[ i ], 1 ) )
            inpCrVal = InpC( InpSampleVal( yC, xC, CroppedHeight / SubHeightC,
                CroppedWidth / SubWidthC, CroppedCrPic[ i ], 2 ) )
            yPovlp = yP + nnpfc_overlap
            xPovlp = xP + nnpfc_overlap
            if( !nnpfc_component_last_flag ) {
                inputTensor[ 0 ][ i ][ 0 ][ yPovlp ][ xPovlp ] = inpYVal
                inputTensor[ 0 ][ i ][ 1 ][ yPovlp ][ xPovlp ] = inpCbVal
                inputTensor[ 0 ][ i ][ 2 ][ yPovlp ][ xPovlp ] = inpCrVal
            } else {
                inputTensor[ 0 ][ i ][ yPovlp ][ xPovlp ][ 0 ] = inpYVal
                inputTensor[ 0 ][ i ][ yPovlp ][ xPovlp ][ 1 ] = inpCbVal
                inputTensor[ 0 ][ i ][ yPovlp ][ xPovlp ][ 2 ] = inpCrVal
            }
            if( nnpfc_auxiliary_inp_idc = = 1 )
                if( !nnpfc_component_last_flag )
                    inputTensor[ 0 ][ i ][ 3 ][ yPovlp ][ xPovlp ] = strengthControlScaledVal[ i ]
                else
                    inputTensor[ 0 ][ i ][ yPovlp ][ xPovlp ][ 3 ] = strengthControlScaledVal[ i ]
        }
else if( nnpfc_inp_order_idc = = 3 )
    for( yP = -nnpfc_overlap; yP < inpPatchHeight + nnpfc_overlap; yP++)
        for( xP = -nnpfc_overlap; xP < inpPatchWidth + nnpfc_overlap; xP++ ) {
            yTL = cTop + yP * 2
            xTL = cLeft + xP * 2
            yBR = yTL + 1
            xBR = xTL + 1
            yC = cTop / 2 + yP
            xC = cLeft / 2 + xP
            inpTLVal = InpY( InpSampleVal( yTL, xTL, CroppedHeight,
                CroppedWidth, CroppedYPic[ i ], 0 ) )
            inpTRVal = InpY( InpSampleVal( yTL, xBR, CroppedHeight,
                CroppedWidth, CroppedYPic[ i ], 0 ) )
            inpBLVal = InpY( InpSampleVal( yBR, xTL, CroppedHeight,
                CroppedWidth, CroppedYPic[ i ], 0 ) )
            inpBRVal = InpY( InpSampleVal( yBR, xBR, CroppedHeight,
                CroppedWidth, CroppedYPic[ i ], 0 ) )
            inpCbVal = InpC( InpSampleVal( yC, xC, CroppedHeight / 2,
                CroppedWidth / 2, CroppedCbPic[ i ], 1 ) )
            inpCrVal = InpC( InpSampleVal( yC, xC, CroppedHeight / 2,
                CroppedWidth / 2, CroppedCrPic[ i ], 2 ) )
            yPovlp = yP + nnpfc_overlap
            xPovlp = xP + nnpfc_overlap
            if( !nnpfc_component_last_flag ) {
```

[Table 12]

```
        inputTensor[ 0 ][ i ][ 0 ][ yPovlp ][ xPovlp ] = inpTLVal
        inputTensor[ 0 ][ i ][ 1 ][ yPovlp ][ xPovlp ] = inpTRVal
        inputTensor[ 0 ][ i ][ 2 ][ yPovlp ][ xPovlp ] = inpBLVal
        inputTensor[ 0 ][ i ][ 3 ][ yPovlp ][ xPovlp ] = inpBRVal
        inputTensor[ 0 ][ i ][ 4 ][ yPovlp ][ xPovlp ] = inpCbVal
        inputTensor[ 0 ][ i ][ 5 ][ yPovlp ][ xPovlp ] = inpCrVal
    } else {
        inputTensor[ 0 ][ i ][ yPovlp ][ xPovlp ][ 0 ] = inpTLVal
        inputTensor[ 0 ][ i ][ yPovlp ][ xPovlp ][ 1 ] = inpTRVal
        inputTensor[ 0 ][ i ][ yPovlp ][ xPovlp ][ 2 ] = inpBLVal
        inputTensor[ 0 ][ i ][ yPovlp ][ xPovlp ][ 3 ] = inpBRVal
        inputTensor[ 0 ][ i ][ yPovlp ][ xPovlp ][ 4 ] = inpCbVal
        inputTensor[ 0 ][ i ][ yPovlp ][ xPovlp ][ 5 ] = inpCrVal
    }
    if( nnpfc_auxiliary_inp_idc  = =  1 )
        if( !nnpfc_component_last_flag )
            inputTensor[ 0 ][ i ][ 6 ][ yPovlp ][ xPovlp ] = strengthControlScaledVal[ i ]
        else
            inputTensor[ 0 ][ i ][ yPovlp ][ xPovlp ][ 6 ] = strengthControlScaledVal[ i ]
    }
}
```

nnpfc_out_format_idc equal to 0 may specify that the sample values output by NNPF are real numbers whose value range from 0 to 1 is linearly mapped to an unsigned integer value range from 0 to (1 << bitDepth) - 1, for the bit depth bitDepth required for subsequent postprocessing or display. nnpfc_out_format_idc equal to 1 may specify that the luma sample values output by the NNPF are unsigned integers in the range of 0 to (1 << outTensorBitDepthY) - 1, and that the chroma sample values output by the NNPF are unsigned integers in the range of 0 to (1 << (1 << outTensorBitDepthC) - 1. Values of nnpfc_out_format_idc greater than 1 may be reserved for future use and shall not be present in the bitstream. Decoders shall ignore NNPFC SEI messages containing reserved values of nnpfc_out_format_idc.

nnpfc_out_order_idc may indicate the output order of samples output from the NNPF. The value of nnpfc_out_order_idc shall be in the range of 0 to 3 in the bitstream. Values of nnpfc_out_order_idc in the range of 4 to 255 may be reserved for future use and may not be present in the bitstream. Decoders shall ignore NNPFC SEI messages with nnpfc_out_order_idc in the range of 4 to 255. Values of nnpfc_out__order_idc greater than 255 are not present in the bitstream and are not reserved for future use. If the value of chromaUpsamplingFlag is 1, the value of nnpfc_out_order_idc shall not be equal to 0 or 3. If the value of colourizationFlag is 1, the value of nnpfc_out__order_idc shall not be equal to 0.

Table 13 shows an informative description of nnpfc_out__order_idc values.

[Table 13]

| nnpfc_out_order_idc | Description |
|---|---|
| 0 | Since only a luma matrix is present in the output tensor, the number of channels may be equal to 1. |
| 1 | Since only chroma matrices are present in the output tensor, the number of channels may be equal to 2. |
| 2 | Since luma nad chroma matrices are present in the output tensor, the number of channels may be equal to 3. |
| 3 | Since four luma matrices and two chroma matrices are present in the output tensor, the number of channels may be equal to 6. nnpfc_out__order_idc may be used only when the output chroma format is 4:2:0. |

(continued)

| nnpfc_out_order_idc | Description |
|---|---|
| 4 ... 255 | reserved |

nnpfc_out__tensor_luma_bitdepth_minus8+8 may specify the bit depth of luma sample values in the output integer tensor. The value of nnpfc_out__tensor_luma bitdepth_minus8 shall be in the range of 0 to 24. The value of outTensorBitDepthY may be derived as shown in Equation 7.

[Equation 7]

$$\text{outTensorBitDepth}_Y = \text{nnpfc\_out\_tensor\_luma\_bitdepth\_minus8} + 8$$

nnpfc_out__tensor_chroma_bitdepth_minus8+8 may specify the bit depth of chroma sample values in the output integer tensor. The value of nnpfc_out_tensor_chroma_bitdepth_minus8 shall be in the range of 0 to 24. The value of outTensorBitDepthC may be derived as shown in Equation 8.

[Equation 8]

$$\text{outTensorBitDepth}_C = \text{nnpfc\_out\_tensor\_chroma\_bitdepth\_minus8} + 8$$

If the value of bitDepthUpsamplingFlag is 1, the value of nnpfc_out_format_idc shall be equal to 1, and at least one of the following constraints may be true:

- nnpfc_out__tensor_luma_bitdepth_minus8+8 is present, and outTensorBitDepth$_Y$ is greater than BitDepth$_Y$
- nnpfc _out_tensor_chroma bitdepth_minus8+8 is present, and outTensorBitDepthc is greater than BitDepthc

If nnpfc_inp_tensor_luma bitdepth_minus8, nnpfc_inp _tensor_chroma_bitdepth_minus8, nnpfc_out_tensor_luma_bitdepth minus8, and nnpfc_out_tensor_chroma_bitdepth minus8 are present and outTensorBitDepth$_Y$ is greater than inpTensorBitDepth$_Y$, then outTensorBitDepthC shall not be less than inpTensorBitDepthC. If nnpfc_inp_tensor_luma bitdepth_minus8, nnpfc_inp_tensor_chroma bitdepth_minus8, nnpfc_out_tensor_luma_bitdepth minus8, and nnpfc_out_tensor_chroma_bitdepth minus8 are present, and outTensorBitDepthc is greater than inpTensorBitDepthc, then outTensorBitDepth$_Y$ shall not be less than inpTensorBitDepth$_Y$.

The process of deriving sample values in filtered sample arrays FilteredYPic, FilteredCbPic, and FilteredCrPic from the output tensor for given vertical sample coordinates cTop and horizontal sample coordinates cLeft, which represent the top-left sample locations of the sample patches contained in the input tensor, StoreOutputTensors( ) may be represented as a combination of Tables 14 and 15.

[Table 14]

```
for( i = 0; i < numOutputPics; i++ ) {
   if( nnpfc_out_order_idc == 0 )
      for( yP = 0; yP < outPatchHeight; yP++)
         for( xP = 0; xP < outPatchWidth; xP++ ) {
            yY = cTop * outPatchHeight / inpPatchHeight + yP
            xY = cLeft * outPatchWidth / inpPatchWidth + xP
            if ( yY < nnpfcOutputPicHeight && xY < nnpfcOutputPicWidth )
               if( !nnpfc_component_last_flag )
                  FilteredYPic[ i ][ xY ][yY ] = outputTensor[ 0 ][ i ][ 0 ][ yP ][ xP ]
               else
                  FilteredYPic[ i ][ xY ][ yY ] = outputTensor[ 0 ][ i ][ yP ][ xP ][ 0 ]
         }
   else if( nnpfc_out_order_idc == 1 )
      for( yP = 0; yP < outPatchCHeight; yP++)
         for( xP = 0; xP < outPatchCWidth; xP++ ) {
            xSrc = cLeft * horCScaling + xP
            ySrc = cTop * verCScaling + yP
            if ( ySrc < nnpfcOutputPicHeight / outSubHeightC &&
                  xSrc < nnpfcOutputPicWidth / outSubWidthC )
               if( !nnpfc_component_last_flag ) {
                  FilteredCbPic[ i ][ xSrc ][ ySrc ] = outputTensor[ 0 ][ i ][ 0 ][ yP ][ xP ]
                  FilteredCrPic[ i ][ xSrc ][ ySrc ] = outputTensor[ 0 ][ i ][ 1 ][ yP ][ xP ]
               } else {
                  FilteredCbPic[ i ][ xSrc ][ ySrc ] = outputTensor[ 0 ][ i ][ yP ][ xP ][ 0 ]
                  FilteredCrPic[ i ][ xSrc ][ ySrc ] = outputTensor[ 0 ][ i ][ yP ][ xP ][ 1 ]
               }
         }
   else if( nnpfc_out_order_idc == 2 )
      for( yP = 0; yP < outPatchHeight; yP++)
         for( xP = 0; xP < outPatchWidth; xP++ ) {
            yY = cTop * outPatchHeight / inpPatchHeight + yP
            xY = cLeft * outPatchWidth / inpPatchWidth + xP
            yC = yY / outSubHeightC
            xC = xY / outSubWidthC
            yPc = ( yP / outSubHeightC ) * outSubHeightC
            xPc = ( xP / outSubWidthC ) * outSubWidthC
            if ( yY < nnpfcOutputPicHeight && xY < nnpfcOutputPicWidth )
```

[Table 15]

```
                if( !nnpfc component last flag ) {
                   FilteredYPic[ i ][ xY ][ yY ] = outputTensor[ 0 ][ i ][ 0 ][ yP ][ xP ]
                   FilteredCbPic[ i ][ xC ][ yC ] = outputTensor[ 0 ][ i ][ 1 ][ yPc ][ xPc ]
                   FilteredCrPic[ i ][ xC ][ yC ] = outputTensor[ 0 ][ i ][ 2 ][ yPc ][ xPc ]
                } else {
                   FilteredYPic[ i ][ xY ][ yY ] = outputTensor[ 0 ][ i ][ yP ][ xP ][ 0 ]
                   FilteredCbPic[ i ][ xC ][ yC ] = outputTensor[ 0 ][ i ][ yPc ][ xPc ][ 1 ]
                   FilteredCrPic[ i ][ xC ][ yC ] = outputTensor[ 0 ][ i ][ yPc ][ xPc ][ 2 ]
                }
             }
       else if( nnpfc out order idc == 3 )
          for( yP = 0; yP < outPatchHeight; yP++ )
             for( xP = 0; xP < outPatchWidth; xP++ ) {
                ySrc = cTop / 2 * outPatchHeight / inpPatchHeight + yP
                xSrc = cLeft / 2 * outPatchWidth / inpPatchWidth + xP
                if ( ySrc < nnpfcOutputPicHeight / 2 &&
                     xSrc < nnpfcOutputPicWidth / 2 )
                   if( !nnpfc component last flag ) {
                      FilteredYPic[ i ][ xSrc * 2 ][ ySrc * 2 ] = outputTensor[ 0 ][ i ][ 0 ][ yP ][ xP ]
                      FilteredYPic[ i ][ xSrc * 2 + 1 ][ ySrc * 2 ] = outputTensor[ 0 ][ i ][ 1 ][ yP ][ xP ]
                      FilteredYPic[ i ][ xSrc * 2 ][ ySrc * 2 + 1 ] = outputTensor[ 0 ][ i ][ 2 ][ yP ][ xP ]
                      FilteredYPic[ i ][ xSrc * 2 + 1][ ySrc * 2 + 1 ] = outputTensor[ 0 ][ i ][ 3 ][ yP ][ xP ]
                      FilteredCbPic[ i ][ xSrc ][ ySrc ] = outputTensor[ 0 ][ i ][ 4 ][ yP ][ xP ]
                      FilteredCrPic[ i ][ xSrc ][ ySrc ] = outputTensor[ 0 ][ i ][ 5 ][ yP ][ xP ]
                   } else {
                      FilteredYPic[ i ][ xSrc * 2 ][ ySrc * 2 ] = outputTensor[ 0 ][ i ][ yP ][ xP ][ 0 ]
                      FilteredYPic[ i ][ xSrc * 2 + 1 ][ ySrc * 2 ] = outputTensor[ 0 ][ i ][ yP ][ xP ][ 1 ]
                      FilteredYPic[ i ][ xSrc * 2 ][ ySrc * 2 + 1 ] = outputTensor[ 0 ][ i ][ yP ][ xP ][ 2 ]
                      FilteredYPic[ i ][ xSrc * 2 + 1][ ySrc * 2 + 1 ] = outputTensor[ 0 ][ i ][ yP ][ xP ][ 3 ]
                      FilteredCbPic[ i ][ xSrc ][ ySrc ] = outputTensor[ 0 ][ i ][ yP ][ xP ][ 4 ]
                      FilteredCrPic[ i ][ xSrc ][ ySrc ] = outputTensor[ 0 ][ i ][ yP ][ xP ][ 5 ]
                   }
                }
             }
       }
```

nnpfc_separate_colour_description_present_flag equal to 1 may specify that a distinct combination of colour primaries, transfer characteristics, matrix coefficients and scaling and offset values for the picture resulting from the NNPF is specified in the SEI message syntax structure. nnpfc_separate_colour_description_present_flag equal to 0 may specify that the combination of colour primaries, transfer characteristics, matrix coefficients and scaling and offset values for the picture resulting from the NNPF is the same as indicated in VUI parameters for the CLVS.

nnpfc_colour_primaries may have the same semantics as defined for the vui_colour_primaries syntax element, except as follows:

- nnpfc_colour_primaries may specify the colour_primaries of the picture resulting from applying the NNPF specified in the SEI message, rather than the colour_primaries used for the CLVS.
- When nnpfc_colour_primaries is not present in the NNPFC SEI message, the value of nnpfc_colour_primaries may be inferred to be equal to vui_colour_primaries.

nnpfc_transfer_characteristics may have the same semantics as defined for the vui_transfer_characteristics syntax element, except as follows:

- nnpfc_transfer_characteristics may specify the transfer characteristics of the picture resulting from applying the NNPF specified in the SEI message, rather than the transfer characteristics used for the CLVS.
- When nnpfc_transfer_characteristics is not present in the NNPFC SEI message, the value of nnpfc_transfer_characteristics may be inferred to be equal to vui_transfer_characteristics.

nnpfc_matrix_coeffs may describe equations used to derive luma and chroma signals from green, blue and red or Y, Z and X primaries. The semantics of nnpfc_matrix_coeffs may be applied to pictures resulting from applying NNPF specified in the SEI message, and BitDepth$_Y$ and BitDepthc may be equal to outTensorBitDepth$_Y$ and outTensorBitDepthc respectively as indicated for MatrixCoefficients. If nnpfc_matrix_coeffs is not present in the NNPFC SEI message, the value of nnpfc_matrix_coeffs may be inferred to be equal to vui_matrix_coeffs.

nnpfc_matrix_coeffs shall not be equal to 0 unless the following conditions are satisfied:

- nnpfc_out_tensor_chroma_bitdepth minus8 is equal to nnpfc_out_tensor_luma_bitdepth_minus8
- nnpfc_out_order_idc is equal to 2, outSubHeightC is equal to 1, and outSubWidthC is equal to 1

nnpfc_matrix_coeffs shall not be equal to 8 unless any of the following conditions are satisfied:

- nnpfc_out_tensor_chroma_bitdepth_minus8 is equal to nnpfc_out_tensor_luma_bitdepth_minus8
- nnpfc_out_tensor_chroma_bitdepth_minus8 is equal to nnpfc_out_tensor_luma_bitdepth_minus8+1, nnpfc_out_order_idc is equal to 2, outSubHeightC is equal to 2, and outSubWidthC is equal to 1.

nnpfc_full_range_flag may specify scaling and offset values applied with respect to matrix coefficients as specified by nnpfc_matrix_coeffs. The semantics of nnpfc_full_range_flag may be the same as specified for VideoFullRangeFlag. If nnpfc_full_range_flag is not present, the value of nnpfc_full_range_flag may be inferred to be equal to 0.

nnpfc chroma_loc_info_present_flag equal to 1 may specify that the nnpfc_chroma_sample_loc_type_frame syntax element is present in the NNPFC SEI message. nnpfc_chroma_loc_info_present_flag equal to 0 may specify that the nnpfc_chroma_sample_loc_type_frame syntax element is not present in the NNPFC SEI message. The value of nnpfc_chroma_loc_info_present_flag may be restricted to be equal to 0 when the value of colourizationFlag is 0 or nnpfc_outcolour_format_idc is not 1.

If nnpfc_chroma_sample_loc_type_frame is not equal to 6 and nnpfc_out_colour_format_idc is equal to 1, nnpfc_chroma_sample_loc_type_frame may specify the locations of chroma samples of the output pictures. If nnpfc_chroma__sample_loc_type_frame is equal to 6 and nnpfc_out_colour_format_idc is equal to 1, it may specify that the locations of the chroma samples are not known, are not specified, or are otherwise specified. The value of nnpfc_chroma_sample_loc_type_frame shall be in the range 0 to 6, inclusive.

nnpfc_overlap may indicate the overlapping horizontal and vertical sample counts of adjacent input tensors of the NNPF. The value of nnpfc_overlap shall be in the range of 0 to 16 383, inclusive.

nnpfc_constant_patch_size_flag equal to 1 may indicate that the NNPF accepts exactly the patch size indicated by nnpfc_patch_width_minus1 and nnpfc_patch_height_minus1 as input. nnpfc_constant_patch_size_flag equal to 0 may indicate that the NNPF accepts as input any patch size with width inpPatchWidth and height inpPatchHeight such that the width of an extended patch (i.e., a patch plus the overlapping area), which is equal to inpPatchWidth + 2 * nnpfc_overlap, is a positive integer multiple of nnpfc_extended_patch _width_cd_delta_minus1 + 1 + 2 * nnpfc_overlap, and the height of the extended patch, which is equal to inpPatchHeight + 2 * nnpfc_overlap, is a positive integer multiple of nnpfc_extended_patch_height_cd_delta_minus1 + 1 + 2 * nnpfc_overlap.

nnpfc_patch _width_minus1 + 1, when nnpfc_constant_patch_size_flag equal to 1, may indicate the horizontal sample counts of the patch size required for the input to the NNPF. The value of nnpfc_patchwidth _minus1 shall be in the range of 0 to Min( 32 766, CroppedWidth - 1 ), inclusive.

nnpfc_patch_height_minus1 + 1, when nnpfc_constant_patch_size_flag equal to 1, may indicate the vertical sample counts of the patch size required for the input to the NNPF. The value of nnpfc_patch_height__minus1 shall be in the range of 0 to Min( 32 766, CroppedHeight - 1 ), inclusive.

nnpfc_extended_patch width_cd_delta_minus1 + 1 + 2 * nnpfc_overlap, when nnpfc_constant_patch_size_flag equal to 0, may indicate a common divisor of all allowed values of the width of an extended patch required for the input to the NNPF. The value of nnpfc_extended_patch_width_cd_delta_minus1 shall be in the range of 0 to Min( 32 766, CroppedWidth - 1 ), inclusive.

nnpfc_extended_patch_height_cd_deltaminus1 + 1 + 2 * nnpfc_overlap, when nnpfc_constant_patch_size_flag equal to 0, may indicate a common divisor of all allowed values of the height of an extended patch required for the input to the NNPF. The value of nnpfc_extended_patch_height_cd_delta_minus1 shall be in the range of 0 to Min( 32 766, CroppedHeight - 1 ), inclusive.

The variables inpPatchWidth and inpPatchHeight may be set to the patch size width and the patch size height, respectively.

If nnpfc_constant_patch_size_flag is equal to 0, the following applies:

- The values of inpPatchWidth and inpPatchHeight may be either provided by external means or set by the postprocessor itself.

- The value of inpPatchWidth + 2 * nnpfc_overlap shall be a positive integer multiple of nnpfc_extended_patch_width_cd_deltaminus1 + 1 + 2 * nnpfc_overlap and inpPatchWidth shall be less than or equal to CroppedWidth. The value of inpPatchHeight + 2 * nnpfc_overlap shall be a positive integer multiple of nnpfc_extended_patch_height_cd_deltaminus1 + 1 + 2 * nnpfc_overlap and inpPatchHeight shall be less than or equal to CroppedHeight.

Otherwise (nnpfc_constant_patch_size_flag is equal to 1), the value of inpPatchWidth may be set equal to nnpfc_patch_width_minus1 + 1 and the value of inpPatchHeight may be set equal to nnpfc_patch_height_minus1 + 1.

The variables outPatchWidth, outPatchHeight, horCScaling, verCScaling, outPatchCWidth, and outPatch-CHeight may be derived as shown in Table 16.

[Table 16]

| outPatchWidth = ( nnpfcOutputPicWidth * inpPatchWidth ) / CroppedWidth |
| --- |
| outPatchHeight = ( nnpfcOutputPicHeight * inpPatchHeight ) / CroppedHeight |
| horCScaling = SubWidthC / outSubWidthC |
| verCScaling = SubHeightC / outSubHeightC |
| outPatchCWidth = outPatchWidth * horCScaling |
| outPatchCHeight = outPatchHeight * verCScaling |

outPatchWidth * CroppedWidth shall be equal to nnpfcOutputPicWidth * inpPatchWidth, and outPatchHeight * CroppedHeight shall be equal to nnpfcOutputPicHeight * inpPatchHeight.

nnpfc_padding_type may specify the padding process when referencing sample positions outside the boundary of the input picture as described in Table 17. The value of nnpfc_padding_type shall be in the range of 0 to 4, inclusive. The values 5 to 15 for nnpfc_padding type may be reserved for future use and may not be present in the bitstream. The decoder shall ignore NNPFC SEI messages with nnpfc_padding_type in the range of 5 to 15. The values of nnpfc_padding_type exceeding 15 shall not be present in the bitstream and may not be reserved for future use.

[Table 17]

| nnpfc_padding_type | Description |
| --- | --- |
| 0 | zero padding |
| 1 | replication padding |
| 2 | reflection padding |
| 3 | wrap-around padding |
| 4 | fixed padding |
| 5 ... 15 | reserved |

nnpfc_luma_padding_val may specify the luma value to be used for padding when the value of nnpfc_padding_type is 4. The value of nnpfc_luma_padding_val shall be in the range of 0 to (1 << BitDepthY) - 1, inclusive.

nnpfc_cb_padding_val may specify the Cb value to be used for padding when the value of nnpfc_paddingtype is 4. The value of nnpfc_cb_padding_val shall be in the range of 0 to (1 << BitDepthC) - 1.

nnpfc_cr_padding_val may specify the Cr value to be used for padding when the value of nnpfc_padding_type is 4. The value of nnpfc_cr_padding_val shall be in the range of 0 to (1 << BitDepthC) - 1.

The function InpSampleVal( y, x, picHeight, picWidth, croppedPic, cIdx ) with inputs of vertical sample position y, horizontal sample position x, picture height picHeight, picture width picWidth, sample array CroppedPic, and common index cIdx (0 for luma, 1 for Cb, and 2 for Cr) may return the value of SampleVal derived as shown in Table 18.

[Table 18]

```
if( nnpfc_padding_type = = 0 )
    if( y < 0 || x < 0 || y >= picHeight || x >= picWidth )
        sampleVal = 0
    else
        sampleVal = croppedPic[ x ][ y ]
else if( nnpfc_padding_type = = 1 )
    sampleVal = croppedPic[ Clip3( 0, picWidth − 1, x ) ][ Clip3( 0, picHeight − 1, y ) ]
else if( nnpfc_padding_type = = 2 )
    sampleVal = croppedPic[ Reflect( picWidth − 1, x ) ][ Reflect( picHeight − 1, y ) ]
else if( nnpfc_padding_type = = 3 )
    if( y >= 0 && y < picHeight )
        sampleVal = croppedPic[ Wrap( picWidth − 1, x ) ][ y ]
else if( nnpfc_padding_type = = 4 )
    if( y < 0 || x < 0 || y >= picHeight || x >= picWidth )
        sampleVal = ( cIdx = = 0 ? nnpfc_luma_padding_val :
            ( cIdx = = 1 ? nnpfc_cb_padding_val : nnpfc_cr_padding_val ) )
    else
        sampleVal = croppedPic[ x ][ y ]
```

NNPF PostProcessingFilter( ) may be a target NNPF derived from the semantics of the NNPFA SEI message.
The process of Table 19 may be used, with the NNPF PostProcessingFilter(), to generate, in a patch-wise manner, the filtered and/or interpolated picture(s), which may contain Y, Cb, and Cr sample arrays FilteredYPic, FilteredCbPic, and FilteredCrPic, respectively, as indicated by nnpfc_out__order_idc:

[Table 19]

```
if( nnpfc_inp_order_idc = = 0 || nnpfc_inp_order_idc = = 2 )
    for( cTop = 0; cTop < CroppedHeight; cTop += inpPatchHeight )
        for( cLeft = 0; cLeft < CroppedWidth; cLeft += inpPatchWidth ) {
            DeriveInputTensors( )
            outputTensor = PostProcessingFilter( inputTensor )
            StoreOutputTensors( )
        }
else if( nnpfc_inp_order_idc = = 1 )
    for( cTop = 0; cTop < CroppedHeight / SubHeightC; cTop += inpPatchHeight )
        for( cLeft = 0; cLeft < CroppedWidth / SubWidthC; cLeft += inpPatchWidth ) {
            DeriveInputTensors( )
            outputTensor = PostProcessingFilter( inputTensor )
            StoreOutputTensors( )
        }
else if( nnpfc_inp_order_idc = = 3 )
    for( cTop = 0; cTop < CroppedHeight; cTop += inpPatchHeight * 2 )
        for( cLeft = 0; cLeft < CroppedWidth; cLeft += inpPatchWidth * 2 ) {
            DeriveInputTensors( )
            outputTensor = PostProcessingFilter( inputTensor )
            StoreOutputTensors( )
        }
```

An NNPF-generated picture with index i may contain sample arrays FilteredYPic[ i ], FilteredCbPic[ i ] and FilteredCrPic[ i ], if any. The NNPF-generated picture may not contain overlapping regions.

The NNPF process consists of outputting the NNPF-generated picture in the order of increasing indices according to the process defined in Table 19, where all NNPF-generated pictures interpolated by the NNPF are output and all NNPF-generated pictures corresponding to pictures input to the NNPF may be output as specified in the semantics of the NNPFA SEI message.

nnpfc complexity_info_present_flag equal to 1 may specify that one or more syntax elements that indicate the complexity of the NNPF associated with the nnpfc_id are present. nnpfc_complexity_info_present_flag equal to 0 may specify that no syntax elements that indicates the complexity of the NNPF associated with the nnpfc_id are present.

nnpfc_parameter_type_idc equal to 0 may specify that the neural network uses only integer parameters. nnpfc_parametertype_flag equal to 1 may specify that the neural network may use floating point or integer parameters. nnpfc_parameter_type_idc equal to 2 may specify that the neural network uses only binary parameters. nnpfc_parametertype_idc equal to 3 may be reserved for future use and shall not be present in bitstreams. Decoders shall ignore NNPFC SEI messages with nnpfc_parameter_type_idc equal to 3.

nnpfc_log2_parameter_bit_length_minus3 equal to 0, 1, 2, and 3 may indicate that the neural network does not use parameters of bit length greater than 8, 16, 32, and 64, respectively. When nnpfc_parameter_type_idc is present and nnpfc_log2_parameter_bit_length__minus3 is not present, the neural network may not use parameters of bit length greater than 1.

nnpfc_num_parameters_idc may indicate the maximum number of neural network parameters for the NNPF in units of a power of 2 048. nnpfc _num_parameters_ide equal to 0 may indicate that the maximum number of neural network parameters is unknown. The value nnpfc_num_parameters_idc shall be in the range of 0 to 52, inclusive. Values of nnpfc_num_parameters_idc greater than 52 are reserved for future use and shall not be present in bitstreams. Decoders shall ignore NNPFC SEI messages with nnpfc_num_parameters_idc greater than 52.

If the value of nnpfc _num_parameters_idc is greater than zero, the variable maxNumParameters may be derived as shown in Equation 9.

[Equation 9]

$$\text{maxNumParameters} = (\ 2\ 048\ \ll\ \text{nnpfc\_num\_parameters\_idc}\ ) - 1$$

It is a requirement of bitstream conformance that the number of neural network parameters of the NNPF shall be less than or equal to maxNumParameters.

nnpfc_num__kmac_operations_idc greater than 0 may indicate that the maximum number of multiply-accumulate operations per sample of the NNPF is less than or equal to nnpfc_num_kmac_operations_idc * 1 000. nnpfc _num_kmac_operations_idc equal to 0 may indicate that the maximum number of multiply-accumulate operations of the network is unknown. The value of nnpfc_num_kmac_operations_idc shall be in the range of 0 to $2^{32}$ - 2, inclusive.

nnpfc total kilobyte_size greater than 0 may indicate a total size in kilobytes required to store the uncompressed parameters for the neural network. The total size in bits is a number equal to or greater than the sum of bits used to store each parameter. nnpfc_total_kilobyte_size is the total size in bits divided by 8 000, rounded up. nnpfc_total_kilobyte_size equal to 0 may indicate that the total size required to store the parameters for the neural network is unknown. The value of nnpfc total kilobyte_size shall be in the range of 0 to $2^{32}$ - 2, inclusive.

nnpfc_metadata_extension_num_bits equal to 0 may specify that nnpfc_reserved_metadata_extension is not present. nnpfc_metadata_extension_num_bits greater than 0 may specify the length (in bits) of nnpfc _reserved__metadata_extension. nnpfc_metadata_extension_num__bits shall be equal to 0. Values in the range of 1 to 2 048 for nnpfc_metadata_extension_num__bits are reserved for future use and may not be present in the bitstream. Decoders may allow any value of nnpfc_metadata_extension_num_bits in the range of 0 to 2 048. Values of nnpfc_metadata_extension_num_bits greater than 2 048 are not present in the bitstream and cannot be reserved for future use.

nnpfc _reserved__metadata_extension is not present in the bitstream. However, decoders shall ignore the presence and value of nnpfc _reserved__metadata_extension. If nnpfc _reserved__metadata_extension is present, the length of nnpfc _reserved__metadata_extensionmay be equal to nnpfc _metadata_extension_num_bits.

nnpfc_reserved_zero_bit_b shall be equal to 0 in bitstreams. Decoders shall ignore NNPFC SEI messages in which nnpfc_reserved_zero_bit_b is not equal to 0.

nnpfc_payload_byte[ i ] may contain the i-th byte of a bitstream. The byte sequence nnpfc_payload_byte[ i ] for all present values of i shall be a complete bitstream that conforms to ISO/IEC 15938-17.

**Neural-network post-filter activation (NNPFA)**

The syntax structure for the NNPFA is shown in Table 20.

[Table 20]

| nn_post_filter_activation( payloadSize ) { | Descriptor |
|---|---|
|   **nnpfa_target_id** | ue(v) |
|   **nnpfa_cancel_flag** | u(1) |
|   if( !nnpfa_cancel_flag ) { | |
|     **nnpfa_target_base_flag** | u(1) |
|     **nnpfa_persistence_flag** | u(1) |
|     **nnpfa_num_output_entries** | ue(v) |
|     for( i = 0; i < nnpfa _num_output_entries; i++ ) | |
|       **nnpfa_output_flag[** i ] | u(1) |
|   } | |
| } | |

The NNPFA syntax structure of Table 20 may be signaled in the form of an SEI message. An SEI message signaling the NNPFA syntax structure of Table 20 may be referred to as an NNPFA SEI message.

The NNPFA SEI message may activate or de-activate the possible use of the target neural-network post-processing filter (NNPF), identified by nnpfa_target_id, for post-processing filtering of a set of pictures. For a specific picture for which the NNPF is activated, the target NNPF may be derived as follows.

- If nnpfa_target _base_flag is 1, the target NNPF may be a base NNPF with nnpfc_id equal to nnpfa_target_id.
- Otherwise (if nnpfa_target_base_flag is 0), the target NNPF may be an NNPF specified by the last NNPFC SEI message with nnpfc_id equal to nnpfa_target_id, where the last NNPFC SEI message may precede the first VCL NAL unit of the current picture in decoding order and may not correspond to a repetition of an NNPFC SEI message containing the base NNPF.

There may be several NNPFA SEI messages present for the same picture, for example, when the NNPFs are meant for different purposes or for filtering of different colour components.

nnpfa_target_id may specify the target NNPF, which is specified by one or more NNPFC SEI messages that pertain to the current picture and have nnpfc _id equal to nnpfa_target_id. The value of nnpfa_target_id shall be in the range of 0 to $2^{32}$ - 2.

An NNPFA SEI message with a specific value of nnpfa_target_id shall not be present in a current PU unless one or both of the following conditions are true:

- Within the current CLVS, there is an NNPFC SEI message with nnpfc_id equal to the specific value of nnpfa_target_id present in a PU preceding the current PU in decoding order.
- There is an NNPFC SEI message with nnpfc _id equal to the specific value of nnpfa_target_id in the current PU.

When a PU contains both an NNPFC SEI message with a specific value of nnpfc_id and an NNPFA SEI message with nnpfa_target_id equal to the specific value of nnpfc _id, the NNPFC SEI message shall precede the NNPFA SEI message in decoding order.

nnpfa_cancel_flag equal to 1 may specify that the persistence of the target NNPF established by any previous NNPFA SEI message with the same nnpfa_target_id as the current SEI message is canceled. That is, the target NNPF is no longer used unless it is activated by another NNPFA SEI message with the same nnpfa_target_id as the current SEI message and an nnpfa _cancel_flag equal to 0. nnpfa _cancel_flag equal to 0 may specify that nnpfa_target_base_flag, nnpfa_persistence_flag and nnpfa_num_output_entries follow.

nnpfa_target_base_flag equal to 1 may specify that the target NNPF is the base NNPF with nnpfc _id equal to nnpfa_target _id. nnpfa_target_base_flag equal to 0 may specify that the target NNPF is the NNPF specified by the last NNPFC SEI message with nnpfc _id equal to nnpfa_target_id. Here, the last NNPFC SEI message precedes the first VCL NAL unit of the current picture in decoding order and is not a repetition of the NNPFC SEI message that contains the base NNPF.

nnpfa_persistence_flag may specify the persistence of the target NNPF for the current layer. nnpfa_persistence_flag equal to 0 may specify that the target NNPF may be used for post-processing filtering for the current picture only. nnpfa_persistence_flag equal to 1 may specify that the target NNPF may be used for post-processing filtering for the current picture and all subsequent pictures of the current layer in output order until one or more of the following conditions are true:

- A new CLVS of the current layer begins.
- The bitstream ends.
- A picture in the current layer associated with a NNPFA SEI message with the same nnpfa_target_id as the current SEI message and nnpfa_cancel_flag equal to 1 is output that follows the current picture in output order.

The target NNPF is not applied for this subsequent picture in the current layer associated with a NNPFA SEI message with the same nnpfa_target_id as the current SEI message and nnpfa_cancel_flag equal to 1.

The nnpfcTargetPictures may be the set of pictures to which the last NNPFC SEI message with nnpfc_id equal to nnpfa_target_id that precedes the current NNPFA SEI message in decoding order pertains. nnpfaTargetPictures may be the set of pictures for which the target NNPF is activated by the current NNPFA SEI message. It is a requirement of bitstream conformance that any picture included in nnpfaTargetPictures shall also be included in nnpfcTargetPictures.

nnpfa_num_output_entries may specify the number of nnpfa_output_flag[ i ] syntax elements in the NNPFA SEI message. The value of nnpfa_output_flag[ i ] shall be in the range of 0 to NumInpPicsInOutputTensor.

nnpfa_output_flag[ i ] equal to 1 may specify that an NNPF-generated picture corresponding to an input picture having an index InpIdx[ i ] is output by an NNPF process activated by the NNPFA SEI message. Here, the NNPF process may be specified by the semantics of the NNPFC SEI message. nnpfa_output_flag[ i ] equal to 0 may specify that an NNPF-generated picture (NNPF output picture) corresponding to an input picture having an index InpIdx[ i ] is not output by the NNPF process activated by the NNPFA SEI message. If nnpfa_num output_entries is less than NumInpPicsInOutputTensor, nnpfa_output_flag[ i ] may be inferred to be 1 for each value of i in the range of nnpfa_num_output_entries to NumInpPicsInOutputTensor - 1.

### Post-filter hint

A syntax structure for a post-filter hint is shown in Table 21.

[Table 21]

| post_filter_hint( payloadSize ) { | Descriptor |
|---|---|
|   **filter_hint_cancel_flag** | u(1) |
|   if( !filter_hint_cancel_flag ) { | |
|     **filter_hint_persistence_flag** | u(1) |
|     **filter_hint_size_y** | ue(v) |
|     **filter hint size x** | ue(v) |
|     **filter_hint_type** | u(2) |
|     **filter_hint_chroma_coeff_present_flag** | u(1) |
|     for( cIdx = 0; cIdx < ( filter_hint_chroma_coeff_present_flag ? 3 : 1 ); cIdx++ ) | |
|       for( cy = 0; cy < filter_hint_size_y; cy++ ) | |
|         for( cx = 0; cx < filter_hint_size_x; cx++ ) | |
|           **filter_hint_value[** cIdx ][ cy ][ cx ] | se(v) |
|     } | |
|   } | |

The post-filter hint syntax structure of Table 21 may be signaled in the form of an SEI message. The SEI message signaling the post-filter hint syntax structure of Table 21 may be referred to as a post-filter hint SEI message.

The post-filter hint SEI message provides the coefficients of a post-filter or correlation information for the design of a post-filter for potential use in post-processing of a set of pictures after they are decoded and output to obtain improved displayed quality.

filter_hint_cancel _flag equal to 1 may indicate that the SEI message cancels the persistence of any previous post-filter hint SEI message in output order that applies to the current layer. filter_hint_cancel_flag equal to 0 may indicate that post-filter hint information follows.

filter_hint_persistence_flag may specify the persistence of the post-filter hint SEI message for the current layer. filter _hint_persistence_flag equal to 0 may specify that the post-filter hint applies to the current decoded picture only. filter_hint_persistence_flag equal to 1 may specify that the post-filter hint SEI message applies to the current decoded picture and persists for all subsequent pictures of the current layer in output order until one or more of the following conditions are true:

- A new CLVS of the current layer begins.
- The bitstream ends.
- A picture in the current layer in an AU associated with a post-filter hint SEI message is output that follows the current picture in output order.

filter_hint_size_y may specify the vertical size of the filter coefficient or correlation array. The value of filter_hint_size_y shall be in the range of 1 to 15, inclusive.

filter_hint_size_x may specify the horizontal size of the filter coefficient or correlation array. The value of filter_hint_size_x shall be in the range of 1 to 15, inclusive.

filter_hint_type may identify the type of the transmitted filter hints as specified in Table 22. The value of filter_hint type shall be in the range of 0 to 2, inclusive. The value of filter_hint_type equal to 3 may be reserved for future use and shall not be present in bitstreams. Decoders shall ignore post-filter hint SEI messages having filter_hint type equal to 3.

[Table 22]

| Value | Description |
|-------|-------------|
| 0 | coefficients of 2D-FIR filter |
| 1 | coefficients of two 1D-FIR filters |
| 2 | Cross-correlation matrix |

filter_hint_chroma_coeff_present_flag equal to 1 may specify that filter coefficients for chroma are present. filter_hint_chroma_coeff_present_flag equal to 0 may specify that filter coefficients for chroma are not present.

filter_hint_value[ cIdx ][ cy ][ cx ] may specify a filter coefficient or an element of a cross-correlation matrix between the original and the decoded signal with 16-bit precision. The value of filter_hint_value[ cIdx ][ cy ][ cx ] shall be in the range of $-2^{31} + 1$ to $2^{31} - 1$, inclusive. cIdx may specifies the related colour component, cy represents a counter in vertical direction and cx represents a counter in horizontal direction. Depending on the value of filter_hint type, the following applies:

- If filter_hint_type is equal to 0, the coefficients of a 2-dimensional finite impulse response (FIR) filter with the size of filter_hint _size_y * filter_hint _size_x may be transmitted.
- Otherwise, if filter_hint _type is equal to 1, the filter coefficients of two 1-dimensional FIR filters may be transmitted. In this case, filter_hint_size_y shall be equal to 2. The index cy equal to 0 specifies the filter coefficients of the horizontal filter and cy equal to 1 specifies the filter coefficients of the vertical filter. In the filtering process, the horizontal filter is applied first and the result is filtered by the vertical filter.
- Otherwise (filter_hint _type is equal to 2), the transmitted hints may specify a cross-correlation matrix between the original signal s and the decoded signal s'.

The normalized cross-correlation matrix for a related colour component identified by cIdx with the size of filter_hint_size_y * filter_hint _size_x may be defined as shown in Equation 10.

[Equation 10]

$$filter\_hint\_value(cIdx, cy, cx)$$
$$= \frac{1}{(2^{8+bitDepth}-1)^2 * h * w} \sum_{m=0}^{h-1} \sum_{n=0}^{w-1} s(m,n) * s'(m + cy - OffsetY, n + cx - OffsetX)$$

In Equation 10, s denotes array of samples of the colour component cIdx of the original picture, s' denotes corresponding array of the decoded picture, h denotes the vertical height of the related colour component, w denotes the horizontal width of the related colour component, bitDepth denotes the bit depth of the colour component, OffsetY is equal to ( filter_hint _size_y 1), OffsetX is equal to ( filter_hint_size_x >> 1 ), the range of cy is 0 <= cy < filter_hint_size_y and the range of cx is 0 <= cx < filter_hint_size_x.

The decoder may derive a Wiener post-filter from the cross-correlation matrix of original and decoded signal and the auto-correlation matrix of the decoded signal.

## Problems of the Related Art

In the current design of NNPF related messages (e.g., neural-network post-filter characteristics (NNPFC) SEI (Supplemental Enhancement Information) and/or neural-network post-filter activation (NNPFA) SEI, etc.), multiple input pictures may be used for an activated NNPF, but one or more of the input pictures may be unavailable (e.g., the input picture is not present in the bitstream). For example, the case where one or more of the input pictures is unavailable may include the case where NNPF is activated in a picture at the very beginning of the bitstream. Meanwhile, if one or more input pictures are unavailable, a flag may be provided to indicate whether the unavailable (e.g., missing) picture is to be replaced with a duplicate of the last available input picture or a picture having a zero value pixel. At this time, the flag may be nnpfc_absent_input_pic_zero_flag as a flag signaled in the NNPFC SEI message. In addition, information about whether the filtering process using the NNPF outputs an output picture associated with the input picture for each input picture to the NNPF or not may be signaled. The signaling of the output picture associated with the input picture may be included in the NNPFC SEI message, and this signaling may be updated by the signaling in the NNPFA SEI message associated with the NNPFC SEI message, and in some examples, the output of the picture may be canceled.

On the other hand, in this case, a problem may arise with respect to output pictures associated with unavailable input pictures. It may be desirable that there be no output pictures associated with unavailable input pictures, but a method of preventing it is not clear in the current design of the NNPFC and NNPFA SEI messages.

## Overview of Embodiment

The present disclosure proposes various embodiments that can solve the problems of the conventional design including the above. The following embodiments may be used independently or in combination with each other or other embodiments, and this can also be said to be included in the present disclosure.

1. As an embodiment, an NNPFA SEI message may activate an NNPFC SEI message for a target NNPF (i.e., a target NNPF) that may have multiple input pictures as input, wherein if one or more input pictures are not available (e.g., are not present in the bitstream, etc.) and a related output picture for the unavailable input picture is present (e.g., the value of nnpfc_input_pic_output_flag[ i ] of the input pictures is 1), for each of the input pictures that have associated output pictures but are not available, nnpfa_output_flag[ i ] shall be present, and the value of the corresponding syntax may be a specific value (e.g., 0).

2. Alternatively, the NNPFA SEI message may activate an NNPFC SEI message for a target NNPF (i.e., a target NNPF) that may have multiple input pictures as input, and if one or more input pictures are not available (e.g., are not present in the bitstream), and a related output picture for the unavailable input picture is present (e.g., the value of nnpfc_input_pic_output_flag[ i ] of the input pictures is 1), the following may be applied:

   ∘ The value of specific syntaxes (e.g., nnpfa_num_output_entries, etc.) may be required to be greater than a specific value (e.g., 0).

   - Alternatively, the values of specific syntaxes (e.g., nnpfa_num_output_entries, etc.) may be restricted to be values within a specific range. For example, the values of specific syntaxes shall not be less than a specific value (e.g., X+1), where X may be the index of the last input picture that has an associated output picture (e.g., the picture farthest from the current picture).

   ∘ The values of specific syntaxes (e.g., nnpfa_output_flag[ i ], etc.) for input images that are signaled to have associated output images in NNPFC but are not available may be restricted to specific values (e.g., 0).

3. Alternatively, if the NNPFA SEI message activates an NNPFC SEI message for a target NNPF (i.e., the target NNPF) that may have multiple input pictures as input, and if one or more input pictures are not available (e.g., are not present in the bitstream) and a related output picture for the unavailable input picture is present (e.g., the value of nnpfc_input_pic_output_flag[ i ] of the input pictures is 1), the NNPF-based filtering process may be restricted not to output the output pictures related to these input pictures.

In the following, various embodiments including the above embodiments will be described in greater detail, and improvements for input pictures and output pictures in neural-network post-filter (NNPF) SEI messages of coded video bitstreams are proposed by way of embodiments. Although the embodiments described below are based on standard video codecs (e.g., Versatile Video Coding (VVC) etc.) and Versatile Supplemental Enhancement Information Messages for Coded Video Bitstreams (VSEI), it is obvious that they may be applied to other video coding techniques and thus are also included in the scope of the present disclosure.

Meanwhile, in describing the embodiments below, the NNPF (Neural-network post-filter) SEI message or the NNPF-related SEI message may include an NNPFC (Neural-network post-filter Characteristic) SEI message and/or an NNPFA (Neural-network post-filter activation) SEI message.

Meanwhile, the names of the syntaxes used in explaining the embodiments below are arbitrarily designated for the sake of clarity of explanation, so it is self-evident that the names of the syntaxes may be changed, and even if the names of the syntaxes are changed, they will be included in the present disclosure.

Hereinafter, the embodiments of the present invention will be described in detail with reference to the drawings.

**Embodiment 1**

In Embodiment 1, the embodiment of Table of Contents 1 described in the above-mentioned overview of embodiments will be described in detail. Hereinafter, the VSEI message syntax and semantics will be described.

As an example, the syntax and semantics of NNPF (Neural-network post-filter) related SEI messages (e.g., NNPFA SEI message, etc.) may be modified as follows. The NNPFA SEI message syntax may be signaled as shown in the following table.

[Table 23]

| nn_post_filter_activation( payloadSize ) { | Descriptor |
|---|---|
| **nnpfa_target_id** | ue(v) |
| **nnpfa_cancel_flag** | u(1) |
| if( !nnpfa_cancel_flag ) { | |
| **nnpfa_target_base_flag** | u(1) |
| **nnpfa_persistence_flag** | u(1) |
| **nnpfa_num_output_entries** | ue(v) |
| for( i = 0; i < nnpfa_num_output_entries; i++ ) | |
| **nnpfa_output_flag**[ i ] | u(1) |
| } | |
| } | |

As an example, nnpfa_target_id, which is information related to the target id disclosed in the embodiment of Table 23, nnpfa_cancel_flag, which is information related to cancellation of NNPF persistence, nnpfa_target_base_flag, which is information related to base NNPF, nnpfa_persistence_flag, which is information related to NNPF persistence, nnpfa_output_flag[i], which is information related to the output of an NNPF-generated picture, i.e., an output picture corresponding to an NNPF-based input picture, and nnpfa_num_output_entries, which is information related to the number of nnpfa_output_flag[i], are the same as described above, and therefore, redundant description will be omitted. Meanwhile, nnpfa_output_flag[ i ], which may be included in information about the output of an output picture (e.g., an NNPF-generated picture, etc.) corresponding to an input picture (e.g., output picture output information, etc.), may be present for each input picture, but if the target NNPF (target NNPF) requires multiple input pictures and one or more input pictures are not present in the bitstream (e.g., are unavailable, etc.), but a related output picture for the unavailable input picture is present (e.g., the value of the related nnpfc_input_pic_output_flag[ i ] of the NNPFC SEI message is 1, etc.), the value of the syntax may be restricted to a specific value. For example, nnpfa_output_flag[ i ] shall be present for each unavailable input picture having a related output picture, but the value of the corresponding syntax may be restricted to 0.

**Embodiment 2**

In Embodiment 2, the embodiment of table of contents 2 described in the above-described overview of embodiments will be described in detail. Hereinafter, the VSEI message syntax and semantics will be described.

As an example, syntax such as nnpfa_target_id may be signaled in a VSEI message according to Table 23, and nnpfa_output_flag[ i ] may be included in the SEI message. Meanwhile, nnpfa_output_flag[ i ], which may be included in information about the output of an output picture (e.g., an NNPF-generated picture, etc.) corresponding to an input picture (e.g., output picture output information, etc.), may be present for each input picture, but if a target NNPF (target NNPF) requires multiple input pictures and one or more input pictures are not present in the bitstream (e.g., are unavailable, etc.) but a related output picture for an unavailable input picture is present (e.g., the value of the related nnpfc _input_pic_output_flag[ i ] of the NNPFC SEI message is 1, etc.), there may be restrictions on nnpfa_output_flag[ i ] and/or nnpfa_num_output_entries. For example, the value of nnpfa_num_output_entries, which is information related to the number of nnpfa_output_flag[ i ], may be restricted. As an example, the value of the nnpfa_num_output_entries syntax may be restricted to be less than a specific value (e.g., X+1), where X may be the index of the last input picture for which a related output picture is present (e.g., the index of the picture farthest from the current picture). In addition, the value of the nnpfa_output_flag of input picture that is not available but is signaled to have a related output picture included in the NNPFC may be set to a specific value (e.g., 0).

**Embodiment 3**

In Embodiment 3, the embodiment of table of contents 3 described in the above-described overview of embodiments will be described in detail. Hereinafter, the VSEI message syntax and semantics will be described.

As an example, information such as nnpfc_num_input_pics_minus 1, which is information related to the number of pictures input to the NNPF, nnpfc _input_pic_output_flag[ i ], which is information related to whether the output picture is generated (e.g., output picture presence information, etc.), and nnpfc_absent_input_pic_zero_flag, which is information related to the method of expressing sample value of the input picture that is not present in the bitstream, may be signaled by being included in the NNPF-related message.

Meanwhile, if the NNPFC SEI message is activated by the NNPFA SEI message for a target NNPF having multiple input pictures as input, and one or more input pictures are not available (e.g., are not present in the bitstream), and a related output picture for the unavailable input picture is present (e.g., the value of nnpfc _input_pic_output_flag[ i ] of the input pictures is 1), the filtering process shall not output the output picture related to this input picture. As an example, in this case, the filtering process may be an NNPF-based filtering process, and the output picture may not be present, i.e., the output picture may not be generated.

According to the above-described embodiment described in the present disclosure, not only the conventional technology described above can be solved, but also the error of the decoder can be reduced and the coding quality and efficiency can be improved by diversifying the syntax and/or semantics of information, clarifying constraints on information or clarifying the semantics of information.

**Embodiment of image decoding method**

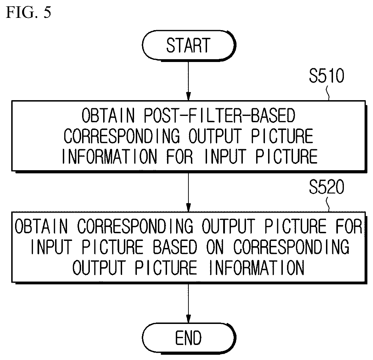

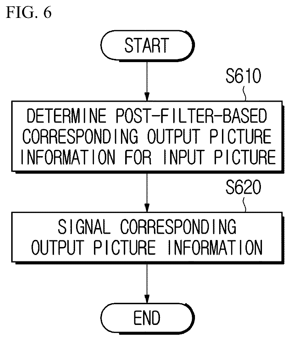

Hereinafter, an image encoding method and an image decoding method according to various embodiments of the present invention will be described. The image decoding method of FIG. 5 may be performed by the image decoding apparatus 200, and the image encoding method of FIG. 6 may be performed by the image encoding apparatus 100. In addition, the image decoding and encoding methods of FIG. 5 and FIG. 6 may be based on the embodiments described above (including Embodiments 1 to 3), respectively.

FIG. 5 is a diagram for explaining an image decoding method that may be performed by an image decoding apparatus according to an embodiment of the present disclosure.

First, as an example, (corresponding) output picture information for an input picture may be obtained (S510) as a neural-network post-filter (NNPF) related SEI (supplemental enhancement information) message (e.g., neural-network post-filter characteristics (NNPFC) message and/or neural-network post-filter activation (NNPFA) message, etc.). The post-filter-based (corresponding) output picture information may include NNPF related information. The NNPF related information may include information described with reference to the table, etc. above.

Thereafter, based on the obtained (corresponding) output picture information, a (corresponding) output picture for the input picture may be obtained (S520). In this case, if the output picture for the input picture is not present (is not generated) or if the output picture for the input picture is present but the output picture is not output, the output picture may not be obtained. On the other hand, if it is determined that the output picture for the input picture is present and the output picture for the input picture is output, the output picture may be obtained. Here, the output picture information may include output picture output information, which is information specifying whether the output picture for the input picture is output. As an example, the output picture output information may have its value determined based on other information, and there may be a constraint for determining the value of the corresponding information. As an example, the output picture output information may include, for example, nnpfa_output_flag[ i ]. As an example, the value of the output picture output information may be determined based on whether the input picture is available (for example, whether the input picture is present in the bitstream). As an example, the availability of the input picture may be determined based on input picture presence information, which is information specifying whether the input picture is available. As an example, the input picture presence information may include inputPresentFlag, and the input picture presence information may be derived based on other information or other syntax. For example, the case where the input picture is not available may include the case where the input picture is not present in the bitstream. In addition, as an example, when the input picture is not available (for example, when the input picture presence information indicates that the input picture is not available), the output picture output information may indicate that the output picture for the corresponding input picture is not output. In addition, as an example, the number of output picture output information may be determined to be a value within a specific range. In addition, as an example, the number of output picture output information may always be determined to be a value greater than a specific value (for example, 0). Including such a case, certain constraints may be present on the number of output picture output information. For example, the value of nnpfa_num_output_entries, which is information that may indicate the number of output picture output information, may be determined to be a value within a specific range. In addition, as an example, the specific range may be determined based on an index value of a specific input picture. In addition, as an example, the specific input picture may be a picture farthest from a specific picture, that is, a last input picture. Meanwhile, as an example, the value of the output picture output information may be determined based on the output picture presence information (i.e., output picture generation information), which is information specifying whether an output picture for the input picture is present (i.e., whether the output picture is generated). As an example, the value of the output picture output information may be determined based on whether the output picture is present and/or whether the input picture is present. As an example, the value of the output picture output information may be determined based on the output picture presence information and/or the input picture presence information. As an example, if the input picture is not available (e.g., the input picture is not present in the bitstream, etc.) and the output picture (for the input picture) is present, the output picture may not be output. More specifically, the output picture output information may indicate that the output picture is not output based on the input picture presence information specifying that the input picture is not available (e.g., the input picture is not present in the bitstream, etc.) and the output picture presence information (for the input picture) specifying that the output picture is present (e.g., the value of nnpfc_input_pic_output_flag[ i ] is 1, etc.). As an example, the fact that the output picture is not output may be expressed by the value of the output picture output information being a specific value (e.g., 0). In this case, as an example, the output of the corresponding output picture may be excluded in a filtering process based on NNPF. Meanwhile, as an example, the output picture presence information may be signaled with an NNPFC SEI message, and the output picture output information may be signaled with an NNPFA SEI message.

Afterwards, the picture may be reconstructed based on the (corresponding) output picture information, although it is not expressed in the drawing.

Meanwhile, since the image decoding method of FIG. 5 corresponds to one embodiment of the present disclosure, certain steps may be changed, the order of steps may be changed, or some steps may be added or deleted, and it will be obvious that such modifications are also included in the present disclosure.

### Embodiment of image encoding method

FIG. 6 is a diagram for explaining an image encoding method that may be performed by an image encoding apparatus according to an embodiment of the present disclosure.

First, post-filter-based output picture information for an input picture may be determined (S610). The post-filter-based output picture information may include NNPF-related information. The NNPF-related information may be the same as described above with reference to the table, etc.

Thereafter, the output picture information may be signaled (S620) as an NNPF (neural-network post-filter) related SEI (supplemental enhancement information) message. As described above, the NNPF related SEI message may include an NNPFC SEI message and/or an NNPFA SEI message. Meanwhile, an output picture for an input picture is not present (is not generated) or an output picture is present (is generated) but the output picture is not output. Meanwhile, if it is determined that an output picture for an input picture is present and the output picture is output, the output picture may be output without change. In this regard, output picture presence information, output picture output information which is information specifying whether the output picture for the input picture is output, and/or input picture presence information, etc. may be included in the output picture information and signaled, but may also be derived to be a specific value by another syntax. As an example, there may be certain constraints in determining the value of the output picture output information. As an example, the value of the output picture output information may be determined based on whether the input picture is available (i.e., whether the input picture is present in the bitstream or whether it will be encoded). More specifically, the value of the output picture output information may be determined to a specific value (e.g., 0) based on, for example, the input picture being determined not to be present in the bitstream (i.e., not available on the decoder side). In addition, as an example, whether the input picture is present in the bitstream may be determined based on other information. Meanwhile, an output picture generated based on the determination that the input picture is not present in the bitstream (a result picture corresponding to the input picture) may not be output, and the output picture output information may indicate this. For example, the output picture output information may include, for example, nnpfa_output_flag[ i ]. For example, the case where the input picture is unavailable may include the case where the input picture is not present in the bitstream. In addition, as an example, the number of output picture output information may be determined to be a value within a specific range. In addition, as an example, the number of output picture output information may always be determined to be a value greater than a specific value (for example, 0). Including such a case, there may be certain constraints on the number of output picture output information. For example, the value of nnpfa_num_output_entries, which is information that may indicate the number of output picture output information, may be determined to be a value within a specific range. In addition, as an example, the specific range may be determined based on an index value of a specific input picture. For example, the specific input picture may be a picture farthest from a specific picture, that is, a last input picture. Meanwhile, as an example, the value of the output picture output information may be determined based on whether the output picture for the input picture is present (i.e., whether the output picture is generated). More specifically, the value of the output picture output information may be determined to a specific value based on whether the output picture for the input picture is present. As an example, the value of the output picture output information may be determined based on whether the output picture is present and/or whether the input picture is present. As an example, whether the input picture is present in the bitstream may be expressed as information on whether the input picture is present and may be expressed as inputPresentFlag. As an example, in this case, if the output picture for the input picture is not present (is not generated) or the output picture for the input picture is not present but the output picture is not output, the output picture may not be obtained. Meanwhile, if it is determined that the output picture for the input picture is present and the output picture for the input picture is output, the output picture may be obtained. Here, the output picture information may include output picture output information, which is information specifying whether the output picture for the input picture is output. As an example, the output picture output information may have its value determined based on other information, and there may be a constraint for determining the value of the information. As an example, the output picture output information may include, for example, nnpfa_output_flag[ i ]. As an example, the value of the output picture output information may be determined based on whether the input picture is available (for example, whether the input picture is present in the bitstream). As an example, the availability of the input picture may be determined based on input picture presence information, which is information specifying whether the input picture is available. As an example, the input picture presence information may include inputPresentFlag, and the input picture presence information may be derived based on other information or other syntax. For example, the case where the input picture is not available may include the case where the input picture is not present in the bitstream. In addition, as an example, when the input picture is not available (for example, when the input picture presence information indicates that the input picture is not available, that is, is not present in the bitstream, etc.), the output picture output information may be determined to indicate that the output picture for the input picture is not output. In addition, as an example, the number of output picture output information may be determined to be a value within a specific range. In addition, as an example, the number of output picture output information may always be determined to be a value that is greater than a specific value (for example, 0). Including such cases, there may be a certain constraint on the number of output picture output information. For example, the value of nnpfa_num _output entries, which is information that may indicate the number of output picture output information, may be determined to be a value within a specific range. Also, as an example, a specific range may be determined based on an index value of a specific input picture, for example, the specific input picture may be a picture farthest from the specific picture, i.e., the last input picture. Meanwhile, as an example, the value of the output picture output information may be determined based on whether the output picture for the input picture is present (i.e., whether the output picture is generated). As an example, the value of the output picture output information may be determined based on whether the output picture is present and/or whether the input picture is present. As an example, the value of the output picture output information may be determined based on what value the output picture presence information (i.e., the output picture generation information) is determined to indicate and/or what value the input picture presence information is determined to indicate. As an example, if the input picture is not available (e.g., the input picture is not present in the bitstream, etc.) and the output picture (for the input picture) is present nevertheless, the output picture may not be output. More specifically, the output picture output information may indicate that the output picture is not output based on the input picture presence information being determined to indicate that the input picture is not available (e.g., the input picture is determined not to be present in the bitstream, or the input picture is not encoded in the bitstream, etc.) and the output picture presence information (for the input picture) being determined to indicate that the output picture is present (e.g., the value of nnpfc_input_pic_output_flag [ i ] is determined to be 1, etc.). As an example, the fact that the output picture is not output may be expressed by the value of the output picture output information being a specific value (e.g., 0). In this case, as an example, the output of the corresponding output picture may be excluded in a filtering process based on NNPF.

Meanwhile, as an example, output picture presence information may be signaled with the NNPFC SEI message, and output picture output information may be signaled with the NNPFA SEI message.

Afterwards, although not shown in the drawing, the picture may be reconstructed based on the output picture information.

In addition, as an example, a computer-readable medium recording a bitstream generated by an image encoding method may be provided, and a method of transmitting a bitstream generated by the image encoding method may be provided.

Meanwhile, since the image decoding method of FIG. 6 corresponds to one embodiment of the present disclosure, certain steps may be changed, the order of steps may be changed, or some steps may be added or deleted, and it will be obvious that such modifications are also included in the present disclosure.

According to the present disclosure, the meaning of information that may be included in VSEI can be clarified, thereby reducing decoder errors, expressing more accurate scenarios, and improving coding quality. In addition, according to the present disclosure, coding efficiency can be improved because clear processing is possible for cases where a corresponding output picture is generated but an input picture is not present.

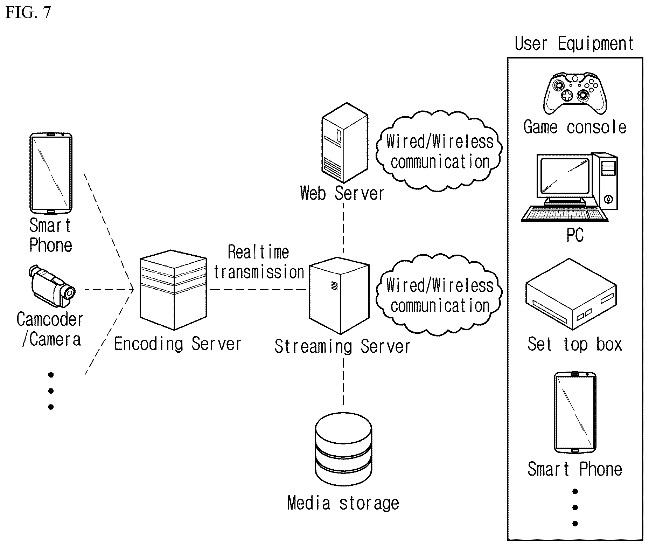

FIG. 7 is a view showing a content streaming system, to which an embodiment of the present disclosure is applicable.

As shown in FIG. 7, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1. An image decoding method performed by an image decoding apparatus, the image decoding method comprising:

    obtaining post-filter-based output picture information for an input picture from a neural-network post-filter (NNPF) related supplemental enhancement information (SEI) message; and
    obtaining an output picture for the input picture based on the output picture information,
    wherein the output picture information includes output picture output information, which is information specifying whether the output picture for the input picture is output.

2. The image decoding method of claim 1, wherein a value of the output picture output information is determined based on whether the input picture is present.

3. The image decoding method of claim 2, wherein the value of the output picture output information is determined further based on output picture presence information, which is information specifying whether the output picture for the input picture is present.

4. The image decoding method of claim 3, wherein based on the input picture being not present and the output picture presence information specifying that the output picture is present, the output picture output information specifies that the output picture is not output.

5. The image decoding method of claim 4, wherein a number of output picture output information is determined to be a value within a specific range.

6. The image decoding method of claim 5, wherein the specific range is determined based on an index value of a specific input picture.

7. The image decoding method of claim 4, wherein a number of output picture output information is always determined to be a value greater than a specific value.

8. The image decoding method of claim 4, wherein output of the output picture for the input picture which is not present is excluded in a filtering process based on the NNPF.

9. The image decoding method of claim 3, wherein the output picture presence information is obtained from an NNPFC SEI message.

10. The image decoding method of claim 1, wherein the output picture output information is obtained from an NNPFA SEI message.

11. An image encoding method performed by an image encoding apparatus, the image encoding method comprising:

    determining post-filter-based output picture information for an input picture; and
    signaling the output picture information as a neural-network post-filter (NNPF) related supplemental enhancement information (SEI) message,
    wherein the output picture information includes output picture output information, which is information specifying whether an output picture for the input picture is output.

12. A computer-readable medium storing a bitstream generated by the image encoding method of claim 11.

13. A method of transmitting a bitstream generated by an image encoding method, the image encoding method comprising:

    determining post-filter-based output picture information for an input picture; and
    signaling the output picture information as a neural-network post-filter (NNPF) related supplemental enhancement information (SEI) message,
    wherein the output picture information includes output picture output information, which is information specifying whether an output picture for the input picture is output.

FIG. 1

FIG. 2

FIG. 3

FIG. 4

FIG. 5

```
        ┌─────────────┐
        │    START    │
        └─────────────┘
               │
               ▼                          S510
  ┌─────────────────────────────────┐
  │     OBTAIN POST-FILTER-BASED     │
  │   CORRESPONDING OUTPUT PICTURE   │
  │    INFORMATION FOR INPUT PICTURE │
  └─────────────────────────────────┘
               │
               ▼                          S520
  ┌─────────────────────────────────┐
  │ OBTAIN CORRESPONDING OUTPUT PICTURE FOR │
  │  INPUT PICTURE BASED ON CORRESPONDING   │
  │     OUTPUT PICTURE INFORMATION          │
  └─────────────────────────────────┘
               │
               ▼
        ┌─────────────┐
        │     END     │
        └─────────────┘
```

FIG. 6

```
        ( START )
             │
             │            S610
             ▼
┌─────────────────────────────┐
│ DETERMINE POST-FILTER-BASED │
│ CORRESPONDING OUTPUT PICTURE │
│ INFORMATION FOR INPUT PICTURE│
└─────────────────────────────┘
             │
             │            S620
             ▼
┌─────────────────────────────┐
│     SIGNAL CORRESPONDING     │
│  OUTPUT PICTURE INFORMATION  │
└─────────────────────────────┘
             │
             ▼
         (  END  )
```

FIG. 7

## INTERNATIONAL SEARCH REPORT

| International application No. |
| --- |
| **PCT/KR2024/008958** |

**A. CLASSIFICATION OF SUBJECT MATTER**

**H04N 19/85**(2014.01)i; **H04N 19/117**(2014.01)i; **H04N 19/70**(2014.01)i; **H04N 19/172**(2014.01)i; **G06N 3/02**(2006.01)i

According to International Patent Classification (IPC) or to both national classification and IPC

**B. FIELDS SEARCHED**

Minimum documentation searched (classification system followed by classification symbols)

H04N 19/85(2014.01); G06T 5/00(2006.01); G06T 9/00(2006.01); H04N 13/00(2006.01); H04N 19/126(2014.01); H04N 19/176(2014.01); H04N 19/46(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포스트 필터(post-filter), 출력 픽처 정보(output picture information), NNPF SEI messages(neural-network post-filter supplemental enhancement information messages)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-1776448 B1 (QUALCOMM INCORPORATED) 07 September 2017 (2017-09-07)<br>See claims 1-3. | 1-13 |
| A | KR 10-2023-0010259 A (TENCENT AMERICA LLC) 18 January 2023 (2023-01-18)<br>See claims 1-2. | 1-13 |
| A | JP 2017-152905 A (OKI ELECTRIC IND CO., LTD.) 31 August 2017 (2017-08-31)<br>See paragraphs [0043]-[0046]. | 1-13 |
| A | KR 10-2022-0137552 A (HYUNDAI MOTOR COMPANY et al.) 12 October 2022 (2022-10-12)<br>See paragraphs [0097] and [0108]. | 1-13 |
| A | KR 10-2020-0140096 A (SAMSUNG ELECTRONICS CO., LTD.) 15 December 2020 (2020-12-15)<br>See claim 1. | 1-13 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 September 2024** | **26 September 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/008958**

| Patent document cited in search report | | | Publication date (day/month/year) | Patent family member(s) | | | Publication date (day/month/year) |
|---|---|---|---|---|---|---|---|
| KR | 10-1776448 | B1 | 07 September 2017 | BR | 112015015802 | A2 | 11 July 2017 |
| | | | | BR | 112015015802 | B1 | 27 September 2022 |
| | | | | BR | 15015802 | A2 | 11 July 2017 |
| | | | | CN | 104919802 | A | 16 September 2015 |
| | | | | CN | 104919802 | B | 12 October 2018 |
| | | | | EP | 2941887 | A1 | 11 November 2015 |
| | | | | JP | 2016-506695 | A | 03 March 2016 |
| | | | | JP | 6235042 | B2 | 22 November 2017 |
| | | | | KR | 10-2015-0104158 | A | 14 September 2015 |
| | | | | US | 2014-0192149 | A1 | 10 July 2014 |
| | | | | US | 9521393 | B2 | 13 December 2016 |
| | | | | WO | 2014-107396 | A1 | 10 July 2014 |
| KR | 10-2023-0010259 | A | 18 January 2023 | CN | 115956363 | A | 11 April 2023 |
| | | | | EP | 4128764 | A1 | 08 February 2023 |
| | | | | EP | 4128764 | A4 | 06 September 2023 |
| | | | | JP | 2023-532397 | A | 28 July 2023 |
| | | | | US | 11979565 | B2 | 07 May 2024 |
| | | | | US | 2022-0385896 | A1 | 01 December 2022 |
| | | | | WO | 2022-251828 | A1 | 01 December 2022 |
| JP | 2017-152905 | A | 31 August 2017 | JP | 6597385 | B2 | 30 October 2019 |
| KR | 10-2022-0137552 | A | 12 October 2022 | CN | 117044211 | A | 10 November 2023 |
| | | | | US | 2024-0031612 | A1 | 25 January 2024 |
| | | | | WO | 2022-211490 | A1 | 06 October 2022 |
| KR | 10-2020-0140096 | A | 15 December 2020 | CN | 113994691 | A | 28 January 2022 |
| | | | | EP | 3954127 | A1 | 16 February 2022 |
| | | | | EP | 3954127 | A4 | 08 June 2022 |
| | | | | US | 10817990 | B1 | 27 October 2020 |
| | | | | US | 10825140 | B1 | 03 November 2020 |
| | | | | WO | 2020-246756 | A1 | 10 December 2020 |

Form PCT/ISA/210 (patent family annex) (July 2022)